# EUROPEAN PATENT APPLICATION

(11) **EP 4 546 879 A1**
(43) Date of publication of application: **30.04.2025**
(21) Application number: 23843234.8
(22) Date of filing: 07.07.2023
(51) Int. Cl.: H04W 48/18, H04W 68/00, H04W 76/10, H04W 76/38

(54) **METHOD AND APPARATUS FOR SUPPORTING DATA COMMUNICATION OF TERMINAL USING NETWORK SLICE**

(30) Priority: 22.07.2022 KR 20220091305
(71) Applicant: Samsung Electronics Co., Ltd., Suwon-si, Gyeonggi-do 16677 (KR)
(72) Inventor: SUH, Kyungjoo, Suwon-si Gyeonggi-do 16677 (KR)
(74) Representative: Nederlandsch Octrooibureau
(86) International application number: PCT/KR2023/009686
(87) International publication number: WO 2024/019383

(57) **Abstract**

The present disclosure relates to a 5G or 6G communication system for supporting a higher data transmission rate. The present disclosure provides a method by which an AMF of a 5G communication system supports data communication using a network slice for a terminal in an idle mode, the method comprising the steps of: receiving, from an SMF, a first message transmitted to the terminal for session management for the data communication with the terminal; transmitting a paging message to the terminal; receiving, from the SMF, a second message triggering a configuration of the network slice before transmitting the first message to the terminal; transmitting the first message to the terminal; and transmitting, to the terminal, a third message changing the configuration of the network slice.

## Description

### [Technical Field]

The disclosure relates to a method and device for supporting a UE performing data communication using a network slice and, more particularly, to a method and device for supporting continuity of a network slice service to a UE in an idle mode.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mm Wave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the development of 5G communication systems, network slice (or network slicing) technology has been introduced for radio access network (RAN) and core network (CN) structures.

According to the prior art, when the network slice authority, authentication, etc. of the UE are changed (e.g., due to movement of the UE), the service may not be supported due to communication disconnection or retransmission.

### [Detailed Description of the Invention]

### [Technical Problem]

There is provided a method and device for supporting a network slice service when a network slice-related authority or authentication of the UE is changed during communication using a network slice of the UE, or when the configuration of the UE is changed or a session-related retransmission occurs.

### [Technical Solution]

The disclosure provides a method for supporting data communication using a network slice to a user equipment (UE) in an idle mode by an access and mobility management function (AMF) in a 5G communication system, the method comprising: receiving, from a session management function (SMF), a first message transmitted to the UE for session management for data communication with the UE, transmitting, to the UE, a paging message, receiving, from the SMF, a second message triggering a configuration of the network slice before transmitting the first message to the UE, transmitting, to the UE, the first message, and transmitting, to the UE, a third message for changing the configuration of the network slice.

The disclosure provides a method for performing data communication using a network slice by a user equipment (UE) in an idle mode in a 5G communication system, comprising receiving, from an access and mobility management function (AMF), a paging message, receiving, from the AMF, a first message transmitted from an session management function (SMF) for session management for data communication, and receiving, from the AMF, a third message for changing a configuration of the network slice, wherein a second message triggering the configuration of the network slice is received by the AMF before receiving the first message.

The disclosure provides a method for supporting data communication using a network slice to a user equipment (UE) in an idle mode by an session management function (SMF) in a 5G communication system, comprising transmitting, to an access and mobility management function (AMF), a first message transmitted to the UE for session management for data communication with the UE, transmitting, to the AMF, a second message triggering a configuration of the network slice to the AMF, receiving a third message in response to the first message, and releasing or routing a session indicated by the first message based on information included in the third message.

The disclosure provides an access and mobility management function (AMF) device supporting data communication using a network slice to a UE in an idle mode in a 5G communication system, comprising a transceiver and a processor configured to control the transceiver to receive, from a session management function (SMF), a first message transmitted to the UE for session management for data communication with the UE, transmit, to the UE, a paging message, receive, from the SMF, a second message triggering a configuration of the network slice before transmitting the first message to the UE, transmit, to the UE, the first message, and transmit, to the UE, a third message for changing the configuration of the network slice.

The disclosure provides a user equipment (UE) device in an idle mode performing data communication using a network slice in a 5G communication system, comprising a transceiver and a processor configured to control the transceiver to receive, from an access and mobility management function (AMF), a paging message, receive, from the AMF, a first message transmitted from a session management function (SMF) for session management for data communication, and receive, from the AMF, a third message for changing a configuration of the network slice, wherein a second message triggering the configuration of the network slice is received by the AMF before the transceiver receives the first message.

The disclosure provides a session management function (SMF) device supporting data communication using a network slice to a user equipment (UE) in an idle mode in a 5G communication system, comprising a transceiver and a processor configured to control the transceiver to transmit, to an access and mobility management function (AMF), a first message transmitted to the UE for session management for data communication with the UE, transmit, to the AMF, a second message triggering a configuration of the network slice, receive a third message in response to the first message, and release or route a session indicated by the first message based on information included in the third message.

### [Advantageous Effects]

When a network slice-related authority or authentication of the UE is changed when the UE moves while performing communication using a network slice, or when the configuration of the UE is changed or a session-related retransmission occurs, it is possible to support a network slice service to the UE.

### [Brief Description of the Drawings]

FIG. 1 illustrates an example of a 5G network environment according to an embodiment of the disclosure;
FIG. 2 is a flowchart illustrating an embodiment for enabling network slice support and communication even when a slice authority or authentication change occurs in a 5G network according to an embodiment of the disclosure;
FIG. 3 is a flowchart illustrating an embodiment for enabling network slice support and communication even when a slice authority or authentication change occurs in a 5G network according to an embodiment of the disclosure;
FIG. 4 is a flowchart illustrating an embodiment for enabling network slice support and communication even when a slice authority or authentication change occurs in a 5G network according to an embodiment of the disclosure;
FIG. 5 is a flowchart illustrating an embodiment for enabling network slice support and communication even when a slice authority or authentication change occurs in a 5G network according to an embodiment of the disclosure;
FIG. 6 is a flowchart illustrating an embodiment for enabling network slice support and communication even when a slice authority or authentication change occurs in a 5G network according to an embodiment of the disclosure;
FIG. 7 is a flowchart illustrating an embodiment for enabling network slice support and communication even when a slice authority or authentication change occurs in a 5G network according to an embodiment of the disclosure;
FIG. 8 is a flowchart illustrating an embodiment for enabling network slice support and communication even when a slice authority or authentication change occurs in a 5G network according to an embodiment of the disclosure;
FIG. 9 is a flowchart illustrating an embodiment for enabling network slice support and communication even when a slice authority or authentication change occurs in a 5G network according to an embodiment of the disclosure;
FIG. 10 is a view illustrating a configuration of a UE according to an embodiment;
FIG. 11 is a view illustrating a configuration of a network entity according to an embodiment;
FIG. 12 is a view illustrating a method by an AMF according to an embodiment of the disclosure;
FIG. 13 is a view illustrating a method by a UE according to an embodiment of the disclosure; and
FIG. 14 is a view illustrating a method by an SMF according to an embodiment of the disclosure.

### [Mode for Carrying out the Invention]

Hereinafter, embodiments of the disclosure are described in detail with reference to the accompanying drawings. In describing embodiments, the description of technologies that are known in the art and are not directly related to the present invention is omitted. This is for further clarifying the gist of the present disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification.

It should be appreciated that the blocks in each flowchart and combinations of the flowcharts may be performed by computer program instructions.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments, a "...unit" may include one or more processors.

As used herein, terms for identifying access nodes, terms denoting network entities, terms denoting messages, terms denoting inter-network entity interfaces, and terms denoting various pieces of identification information are provided as an example for ease of description. Thus, the disclosure is not limited to the terms, and the terms may be replaced with other terms denoting objects with equivalent technical meanings.

For ease of description, the terms and names defined in the 3rd generation partnership project long term evolution (3GPP LTE) and/or 3GPP NR standards, or terms and names modified based thereupon may be used herein. However, the disclosure is not limited by such terms and names and may be likewise applicable to systems conforming to other standards. According to the disclosure, the base station may be an entity allocating a resource to the UE and may be at least one of a gNode B, gNB, eNode B, eNB, Node B, BS, radio access network (RAN), next generation-RAN (NG-RAN), base station controller, or node on network. The base station may provide network access to UE(s) in an LTE system or NR system. For convenience of description, eNB and gNB may be used interchangeably. In other words, the base station described as an eNB may represent a gNB. The term UE herein may refer to mobile phones, narrow band (NB)-IoT devices, sensors, as well as other wireless communication devices.

The description of embodiments of the disclosure focuses primarily on 3GPP communication standards, but the subject matter of the disclosure may also be applicable to other communication systems with a similar technical background with minor changes without significantly departing from the scope of the present invention, and this may be so performed by the determination of those skilled in the art to which the disclosure pertains.

In 5G or NR systems, the access and mobility management function (AMF) which is a manager entity for managing the mobility of the UE and the session management function (SMF) which is an entity for managing the session are separated. Accordingly, unlike in the 4G LTE communication system, where the mobility management entity (MME) performs both mobility management and session management, in the 5G or NR system, an entity performing mobility management and an entity performing session management are separated as the AMF and the SMF, respectively, so that the communication method and communication management method between the UE and the network entity have been changed.

For non 3GPP access in the 5G or NR system, mobility management and session management, respectively, are performed through the AMF and the SMF, via the non-3GPP inter-working function (N3IWF). Further, security-related information which is a critical factor in mobility management is processed through the AMF.

As described above, in the 4G LTE system, the MME is in charge of mobility management and session management. The 5G or NR system may support a non-standalone architecture that performs communication using the network entities of the 4G LTE system together.

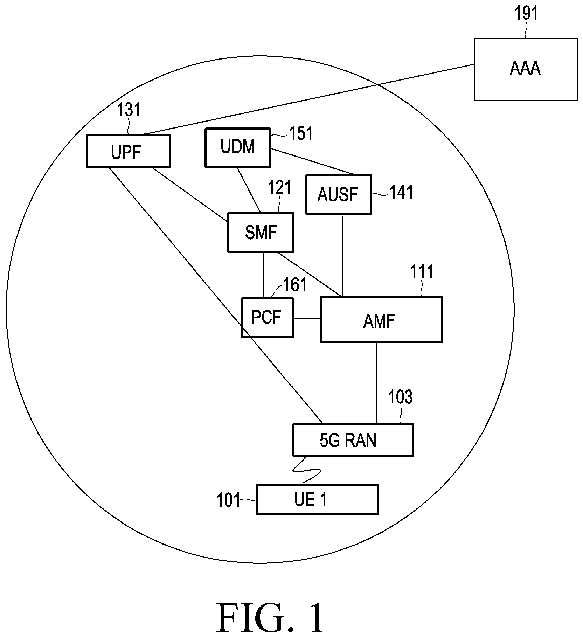

FIG. 1 illustrates a first embodiment for enabling network slice support and communication even when a slice authority or authentication change occurs in a 5G network according to an embodiment of the disclosure.

Referring to FIG. 1, a 5G or NR core network may include at least one of network functions (NFs) such as a user plane function (UPF) 131, a session management function (SMF) 121, an access and mobility management function (AMF) 111, a 5G radio access network (RAN) 103, a user data management (UDM) 151, and a policy control function (PCF) 161. Further, the system may also include an authentication server function (AUSF) 141 and an authentication-authorization-and-accounting (AAA) 171 for authentication purposes.

The AMF 111 is an entity for managing access and mobility of the UE 101. As an example, the AMF 111 may perform such functions as registration of the UE 101, connection, reachability, mobility management, access identification/authentication, and mobility event generation.

The SMF 121 may perform a management function for a protocol data unit (PDU) session of the UE 101. For example, the SMF 121 may perform such network functions as session management functions of establishing, modifying, or releasing a session and maintaining a tunnel between the UPF 131 and the RAN 103 necessary therefor, the functions of allocating and managing an Internet protocol (IP) address of the UE 101, selection and control of the user plane, control of traffic processing on the UPF 131, and billing data gathering control.

The UPF 131 serves to process data of the UE 101 and may play a role to transfer the data transmitted from the UE 101 to an external network or process the data to allow the data introduced from the external network to be transferred to the UE 101. For example, the UPF 131 may perform network functions, such as acting as an anchor between radio access technologies (RATs), packet routing and forwarding, packet inspection, application of user plane policy, creating a traffic usage report, or buffering.

The UDM 151 performs functions, such as generating authentication information for 3GPP security, processing the user ID, managing a list of network functions (NFs) supporting the UE 101, and managing subscription information.

The PCF 161 is an NF that manages operator policy information for providing a service in the 5G system.

The user equipment (UE, or terminal) may connect to the 5G core network through a base station (BS, or 5G radio access network (RAN)) 103. Meanwhile, an N3 interworking function (N3IWF) may be present for the UE to communicate through non 3GPP access. When non-3GPP access is used, session management may be controlled through the UE, non-3GPP access, N3IWF, and SMF, and mobility management may be controlled through the UE, non-3GPP access, N3IWF, and AMF.

In the 5G or NR system, the entities performing mobility management and session management are separated into the AMF 111 and the SMF 121. Meanwhile, the 5G or NR system is considering a standalone (SA) deployment structure that communicates only with 5G or NR entities and a non-standalone (NSA) deployment structure that uses 4G entities and 5G or NR entities together.

As shown in FIG. 1, a deployment in the form in which control is performed by the eNB (or 5G RAN) and the 5G entity of the core network is used when the UE communicates with the network may be possible. In this case, mobility management between the UE and the AMF and session management between the UE and the SMF may be performed in a non-access stratum (NAS) layer which is layer 3.

The communication network on which the disclosure is based assumes a 5G or 4G LTE network. However, the same concept may also be applied to other systems within the category which may be understood by one of ordinary skill in the art.

The 3GPP standard standardized the 5G network system architecture and procedures. A mobile network operator may provide various services in a 5G network. To provide each service, the mobile communication carrier needs to meet different service requirements (e.g., latency, communication range, data rate, bandwidth, reliability, etc.) for each service. To that end, the mobile network operator may constitute the network slice and may allocate network resources suitable for a specific service for each network slice or for each set of network slices. The network resource may mean a network function (NF) or logical resource provided by the NF or radio resource allocation of a base station.

For example, the mobile network operator may configure network slice A for providing a mobile wideband service, network slice B for providing a vehicle communication service, and network slice C for providing an IoT service. In other words, the 5G network may efficiently provide a corresponding service to a UE through a specialized network slice suited for the characteristics of each service.

According to the prior art, if network slice authority, authentication, etc. are changed while the UE is moving, the service may not be supported due to, e.g., communication disconnection and retransmission.

A network slice service ensuring continuity is supported by addressing the issue of failure to support a service due to, e.g., a change in slice authority or authentication when the UE's network slice-related authority or authentication is changed while the UE performs communication using the network slice or when the configuration of the UE is changed or a session-related retransmission occurs.

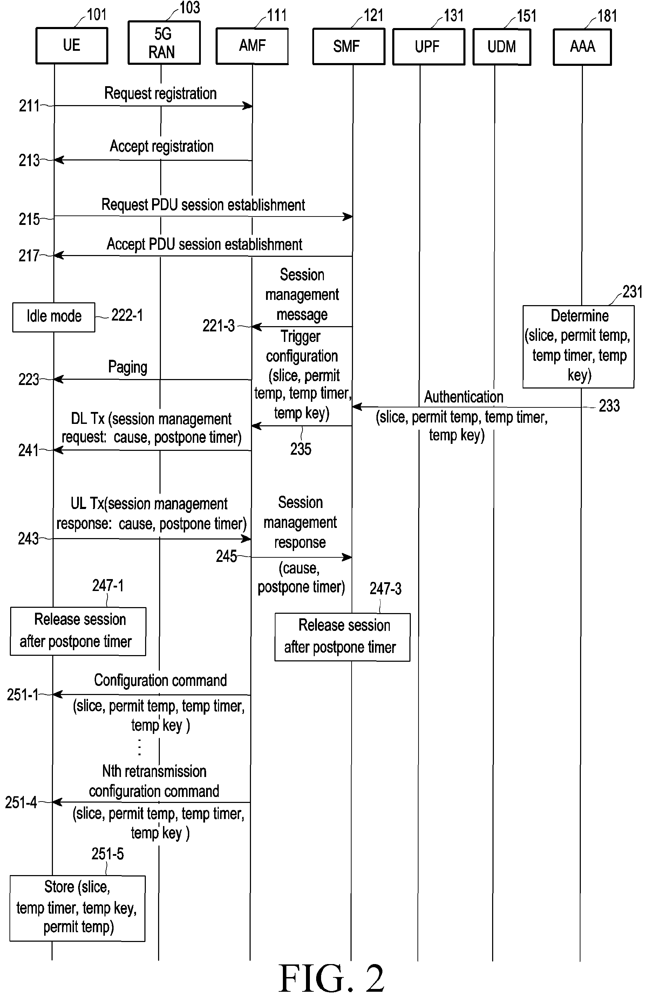

Hereinafter, the embodiments of FIGS. 2, 3, 4, and 5 are embodiments of how to process the data session or configuration, and authentication-related information communicated before when the UE's network slice-related authority, in particular the authority temporarily used or having been used in relation to the network slice by the UE while the UE performs data communication, authentication, or allowed time is changed (e.g., when 235, 335, 435, or 535 occurs).

In other words, the circumstance to be solved in FIG. 2, FIG. 3, FIG. 4, and FIG. 5 is a circumstance in which the AMF receives a session management message from the SMF, transmits a paging signal to the UE to makes it possible for the UE to receive it, and then the AMF tries to transmit a session management message for the UE received from the SMF to the UE. Further, in the circumstance, the AMF receives a configuration change-related message that changes the UE's configuration, and needs to change the UE's configuration. In other words, since in the circumstance, information about use/permission related to the UE's network slice, temporary permission authority, allowed time, or permission authentication has been changed, data communication service may be impossible, communication may be disconnected, or configuration change may not be properly transferred according to application of the configuration information and session management.

FIG. 2 is a flowchart illustrating a procedure for enabling network slice support and communication even when a slice authority or authentication change occurs in a 5G network according to an embodiment of the disclosure.

FIG. 2 is an embodiment of a method of maintaining a communication session for a predetermined period of time when information related to the temporary use of a network slice is changed while the UE performs data communication. FIG. 2 illustrates a method of gently releasing a session using a communication postpone timer.

In FIG. 2, in order to solve the above problematic circumstance, the network (AMF or SMF) may transmit the postpone timer T35y to the UE so that the network (AMF or SMF) and the UE may release the session after the postpone timer expires (241). The network may notify the UE of the occurrence of a cause to release the session through the cause information (241). Upon receiving the information, the UE may release the session after the postpone timer (247-1). The AMF may inform the SMF that the UE's session has been released due to a configuration change because UE's network slice-related use/permission or such temporary permission authority, allowed time, or allowed authentication-related information has been changed (245). Or the AMF may inform it of the postpone timer to allow the SMF to release the UE-related session after the postpone timer due to the configuration change because UE's network slice-related use/permission or such temporary permission authority, allowed time, or allowed authentication-related information has been changed (245).

A detailed communication procedure of a UE and a network entity is described with reference to FIG. 2 as follows.

In step 211, the UE may send a registration request to the AMF.

In step 213, the AMF may send a registration accept message to the UE.

In step 215, the UE may send a PDU session establishment request to the SMF.

In step 217, the SMF may send a session establishment acceptance to the UE.

In step 221-1, it is assumed that the UE is in an idle mode. To resume data communication with the UE in idle mode, the SMF may send a session management message (e.g., a PDU session modification command) to the UE through the AMF.

In other words, when the UE is in the idle mode, the SMF may perform the following operation.

In step 221-3, the SMF may send a session management message to the UE through the AMF. However, if the UE is in idle mode (221-1), the AMF may page the UE to make the UE in the idle state turn to a communicable (reception) state (223).

As such, an embodiment of the session management message sent by the SMF to the AMF may be a PDU session modification command message or the like.

In process 231, the AAA may make determinations for providing and allowing various information related to the UE.

In an embodiment, the AAA may determine at least one of pieces of information such as how long to use or whether to allow (i.e., permission temp) the function allowing for temporary use of a certain network slice (i.e., slice), a timer T35xx (i.e., temp timer) to be used to determine the allowed time to limit the time when it is temporarily used, and security key (i.e., temp key) for temporary use of the network.

In step 233, the AAA may send an authentication message to the SMF.

The authentication message may include the following information.

In an embodiment, the AAA may inform whether the AAA or the corresponding data network name (DNN), operator network, or application network supports the function of temporarily allowing the network slice to the UE, through the authentication message.

Alternatively, the authentication message may include bit information indicating whether to allow or an indicator on permission for whether the AAA or corresponding DNN or operator network, or application network allows the function of allowing the UE to, how long, or temporarily use a certain network slice in relation to use of the network slice by the UE.

Alternatively, the authentication message may include timer T35xx information that will be used to determine the allowed time, to limit the time for temporary use of the network slice.

Alternatively, the authentication message may include information, such as a security key for temporary use of the network slice.

In step 235, the SMF may send a message (e.g., a trigger configuration message) that triggers the configuration to the AMF.

The message triggering the configuration may include the following information.

In an embodiment, whether the SMF supports the function of allowing the network slice to be temporarily allowed and used by the UE may be known through the trigger config message.

Alternatively, bit information indicating whether to allow or an indicator for the permission of whether the SMF allows the function of allowing the UE to, how long, or temporarily use a certain network slice in relation to use of the network slice by the UE may be included in the trigger config message.

Alternatively, the trigger config message may include timer T35xx information that will be used to determine the allowed time, to limit the time for temporary use of the network slice.

Alternatively, the trigger config message may include information, such as a security key for temporary use of the network slice.

While the UE performs data communication through steps 215 to 217, if the UE's network slice-related authority, in particular the authority, authentication, or allowed time when the UE temporarily uses or used in relation to the network slice, is changed (235), data communication service may be impossible, communication may be disconnected, or the configuration change may not be properly transferred according to application of the configuration information with the session management. The embodiment of FIG. 2 illustrates, in steps 241 to 251-5, a procedure of how to process the data session, configuration, or authentication-related information that has been previously communicated to support service continuity without communication disconnection.

Steps 241 to 251-5 below illustrate a procedure of maintaining a communication session for a predetermined time when information related to temporary use of a network slice is changed. Specifically, FIG. 2 illustrates a method of gently releasing a session using a communication postpone timer.

In step 241, the AMF may send a downlink (DL) NAS transport (Tx) message to the UE.

Thee DL NAS transport message may include a session management request message, which is a message sent from the SMF to the UE, or may be encapsulated or sent together.

The AMF may send at least one of additional information, such as cause, postpone timer, and postpone timer range, through DL NAS transport messages as follows. Alternatively, the AMF may include at least one of additional information such as cause, postpone timer, and postpone timer range in the session management request message as follows.

In an embodiment (case A), the AMF may send cause information together to notify that the session management message is not transferred due to a configuration change for the UE, that it may not be transferred, or that the ongoing session should be released due to a change in configuration.

The configuration change information expected to be transferred in this case is as follows.

A change to the authority for the network slice, a change to the allowed time or duration when the network slice may be used, or a change to, e.g., a security key used for authentication for using the network slice. It may be notified that it is not successful to transfer the session management message to the UE or that the session is released to the UE, or that the UE should release the session (notify).

In an embodiment, the (case B) AMF may send a postpone timer.
1) The postpone timer may play a role as follows.
   allows the session to be used by postponing the time of disconnecting communication (or session) rather than immediately disconnecting the data session previously maintained when information such as network slice-related authority, allowed use time information, or security key is changed due to a configuration command while the UE performs network slice data communication.
1-1) The postpone timer may transmit a time value as postpone timer T35yy.
1-2) may transfer postpone timer range information

The postpone timer range plays a role as follows. may transfer the postpone timer range information that allows the data session to be used by postponing the time of disconnecting communication (or session) rather than immediately disconnecting the data session previously maintained when information such as network slice-related authority, allowed use time information, or security key is changed due to a configuration command while the UE performs network slice data communication.

As the method for sensing the postpone timer, three cases are possible.

In an embodiment, there is the following method for sending the postpone timer.

### (case B-1)

In other words, 1) the UE receives the postpone timer range value from the network, 2) the UE generates a random number, 3) as in 24701, if the UE starts the timer for releasing the session by the random number in the postpone timer range, 4) the UE may transmit the corresponding random number to the network. 5) The network receiving the random number may release the session after the random number which is the postpone timer as shown in 247-3.

Alternatively, there may be the following method for sending the postpone timer.

### (case B-2)

In other words, 1) the UE receives a fixed value such as T35yy as the postpone timer from the network, 2) if the UE starts the timer for releasing the session with the postpone timer value as in 247-1, 3) the UE may transmit the corresponding timer value T35yy to the network. This case may be for synchronization when the UE and the SMF manage the session. 4) The network receiving the timer value T35yy may release the session after the timer value T35yy which is the postpone timer as shown in 247-3.

Alternatively, there may be the following method for sending the postpone timer.

### (case B-3)

In other words, 1) the UE receives the postpone timer range value from the network, 2) the UE generates a random number, 3) as in 24701, if the UE starts the timer for releasing the session by the random number in the postpone timer range, 4) the UE may transmit the corresponding postpone timer range to the network. 5) The network receiving the postpone timer range may generate a random number within the postpone timer range which is the postpone timer as shown in 247-3, start the random number timer, and release or locally release the session after the timer value passes.

In step 243, the UE may send an uplink (UL) NAS transport message to the AMF. Thee UL NAS transport message may include a session management response message, which is a message sent from the UE to the SMF, or may be encapsulated or sent together.

The UE may send additional information such as cause, postpone timer, and postpone timer range as follows, and operations of the AMF and SMF receiving the same refer to the following.

In an embodiment (case A), the UE may send cause information together to indicate that the session management is not successful in the UE or that the UE is to release the session (notify).

In an embodiment (case B), the UE may send the postpone timer to indicate to release the session after the postpone timer value or the postpone timer range.

There may be the following method for sending the postpone timer. (case B-1)

In other words, 1) the UE receives the postpone timer range value from the network, 2) the UE generates a random number, 3) as in 24701, if the UE starts the timer for releasing the session by the random number in the postpone timer range, 4) the UE may transmit the corresponding random number to the network. 5) The network receiving the random number may release the session after the random number which is the postpone timer as shown in 247-3.

Alternatively, there may be the following method for sending the postpone timer.

### (case B-2)

In other words, 1) the UE receives a fixed value such as T35yy as the postpone timer from the network, 2) if the UE starts the timer for releasing the session with the postpone timer value as in 247-1, 3) the UE may transmit the corresponding timer value T35yy to the network. This case may be for synchronization when the UE and the SMF manage the session. 4) The network receiving the timer value T35yy may release the session after the timer value T35yy which is the postpone timer as shown in 247-3.

Alternatively, there may be the following method for sending the postpone timer.

### (case B-3)

In other words, 1) the UE receives the postpone timer range value from the network, 2) the UE generates a random number, 3) as in 24701, if the UE starts the timer for releasing the session by the random number in the postpone timer, 4) the UE may transmit the corresponding postpone timer range to the network. 5) The network receiving the postpone timer range may generate a random number within the postpone timer range which is the postpone timer as shown in 247-3, start the random number timer, and release or locally release the session after the timer value passes.

In step 245, the AMF may transmit a session management response message to the SMF. The session management response message is a message sent to the SMF by the UE. When sending the session management response message, the AMF may transmit the following additional information to inform the SMF of the additional information, and the SMF may perform an additional operation according thereto.

The AMF may send additional information such as cause, postpone timer, or postpone timer range as follows.

In an embodiment (case A), the AMF may send cause information together to indicate that the session management is not successful in the UE or that the UE is to release the session (notify).

In an embodiment (case B), there may be the following method for sending the postpone timer by the AMF. (case B-1)

In other words, 1) the UE receives the postpone timer range value from the network, 2) the UE generates a random number, 3) as in 24701, if the UE starts the timer for releasing the session by the random number in the postpone timer, 4) the UE may transmit the corresponding random number to the network. 5) The network receiving the random number may release the session after the random number which is the postpone timer as shown in 247-3.

Alternatively, there may be the following method for sending the postpone timer.

### (case B-2)

In other words, 1) the UE receives a fixed value such as T35yy as the postpone timer from the network, 2) if the UE starts the timer for releasing the session with the postpone timer value as in 247-1, 3) the UE may transmit the corresponding timer value T35yy to the network. This case may be for synchronization when the UE and the SMF manage the session. 4) The network receiving the timer value T35yy may release the session after the timer value T35yy which is the postpone timer as shown in 247-3.

Alternatively, there may be the following method for sending the postpone timer.

### (case B-3)

In other words, 1) the UE receives the postpone timer range value from the network, 2) the UE generates a random number, 3) as in 24701, if the UE starts the timer for releasing the session by the random number in the postpone timer, 4) the UE may transmit the corresponding postpone timer range to the network. 5) The network receiving the postpone timer range may generate a random number within the postpone timer range which is the postpone timer as shown in 247-3, start the random number timer, and release or locally release the session after the timer value passes.

In step 247-1, the UE may store the postpone timer or the postpone timer range. Alternatively, the UE may store the random number generated in the postpone timer as a timer value.

Alternatively, the UE releases the session after the postpone timer or postpone timer range.

In step 247-3, the SMF may store the postpone timer or the postpone timer range. Alternatively, the SMF may store the random number generated in the postpone timer as a timer value. Alternatively, the SMF may store the random number received from the UE in the postpone timer as a timer value.

Alternatively, the SMF releases the session after the postpone timer or random time in the postpone timer range.

In FIG. 2, the AMF may perform the currently ongoing session and send a configuration command message when it performs network slice data communication sent to the UE. In this case, the ongoing session is released after the postpone timer T35yy or the random number time in the postpone timer range.

In step 251-1, the AMF may send a configuration command message to the UE.

The configuration command message plays the following roles, and information transmitted in this case is as follows.

The configuration command message is a message sent to change the UE-related configuration, authentication, or authority by the AMF, SMF, or an entity of the operator network providing the network slice, or the DNN providing the network slice, or the application network providing the network slice.

In this case, information transmitted included in the configuration command message is as follows.

In an embodiment, the configuration command message may notify, update, or change whether the network supports the function of allowing the network slice to be temporarily allowed and used by the UE. Alternatively, the configuration command message may notify, update, or change by including bit information indicating whether to allow or an indicator for the permission of whether the network allows the function of allowing the UE to, how long, or temporarily use a certain network slice in relation to use of the network slice by the UE. Alternatively, the configuration command message may notify, update, or change by including timer T35xx information that will be used to determine the allowed time, to limit the time for temporary use of the network slice. Alternatively, it may notify, update, or change by including information, such as a security key for temporary use of the network slice. Alternatively, the configuration command message may transfer the postpone timer T35yy information. The postpone timer plays a role as follows. may transfer the postpone timer T35yy information that allows the data session to be used by postponing the time of disconnecting communication (or session) rather than immediately disconnecting the data session previously maintained when information such as network slice-related authority, allowed use time information, or security key is changed due to a configuration command while the UE performs network slice data communication.

In step 251-4, the AMF may retransmit the configuration command message to the UE. As in step 251-4 after step 251-1, a case where the configuration command message is retransmitted is a case where the AMF sends the configuration command message, and the timer (e.g., T35zz timer) expires without receiving a response message, so that retransmission is performed. The retransmission may be tried, e.g., four times.

In this case, the following information is transmitted.

In an embodiment, the configuration command message retransmitted may notify, update, or change whether the network supports the function of allowing the network slice to be temporarily allowed and used by the UE. Alternatively, the retransmitted configuration command message may notify, update, or change by including bit information indicating whether to allow or an indicator for the permission of whether the it allows the function of allowing the UE to, how long, or temporarily use a certain network slice in relation to use of the network slice by the UE. Alternatively, the retransmitted configuration command message may notify, update, or change by including timer T35xx information that will be used to determine the allowed time, to limit the time for temporary use of the network slice. Alternatively, the retransmitted configuration command message may notify, update, or change by including information, such as a security key for temporary use of the network slice. Alternatively, the retransmitted configuration command message may transfer the postpone timer T35yy information. The postpone timer plays a role as follows. may transfer the postpone timer T35yy information that allows the data session to be used by postponing the time of disconnecting communication (or session) rather than immediately disconnecting the data session previously maintained when information such as network slice-related authority, allowed use time information, or security key is changed due to a configuration command while the UE performs network slice data communication.

In step 251-5, the UE may store the received information.

In an embodiment, the UE may store the following information.

For example, the UE may store 1) information about the network slice temporally allowed to be used. The UE may store 2) timer T35xx information when the slice temporarily allowed to be used may be used. The UE may store 3) security key information for temporarily using the corresponding network slice. The UE may store 4) information such as a bit or indicator for temporary use indicating that the network slice may be temporarily used. 5) The UE may store the postpone timer T35yy information. The postpone timer plays a role as follows. The postpone timer may store the postpone timer T35yy information that allows the data session to be used by postponing the time of disconnecting communication (or session) rather than immediately disconnecting the data session previously maintained when information such as network slice-related authority, allowed use time information, or security key is changed due to a configuration command while the UE performs network slice data communication.

In step 251-5 and step 247-1, in an embodiment, the UE may store the received information in volatile memory or non-volatile memory as follows.

### Case 1) store in volatile memory

The UE may store the received information in the volatile memory.

The information stored by the UE may be utilized when the UE establishes a PDU session or a next registration request so that it may access and use the network within the temporarily allowed authentication authority, as long as the allowed time, in the allowed network slice.

### Case 2) store in non-volatile memory

The UE may store the received information in the non-volatile memory. When the message received by the UE from the network includes the timer value or timer range, the UE may delete the previously stored timer range or timer value if any. The UE may store the received timer range or timer value. The stored timer value may be maintained even when the UE enters the 5GMM-deregistered state. If the UE has the stored timer, it starts the timer with the timer value. Alternatively, when the UE has the stored timer range, the UE generates a random number within the timer range and starts the timer with the generated timer random number. The information stored by the UE may be utilized when the UE establishes a PDU session or a next registration request so that it may access and use the network within the temporarily allowed authentication authority, as long as the allowed time, in the allowed network slice. The postpone timer or postpone timer range which is the information stored by the UE may be used for the UE to release the data communication after maintaining the session by the random number value generated within the timer range or the timer value, rather than immediately disconnecting the session.

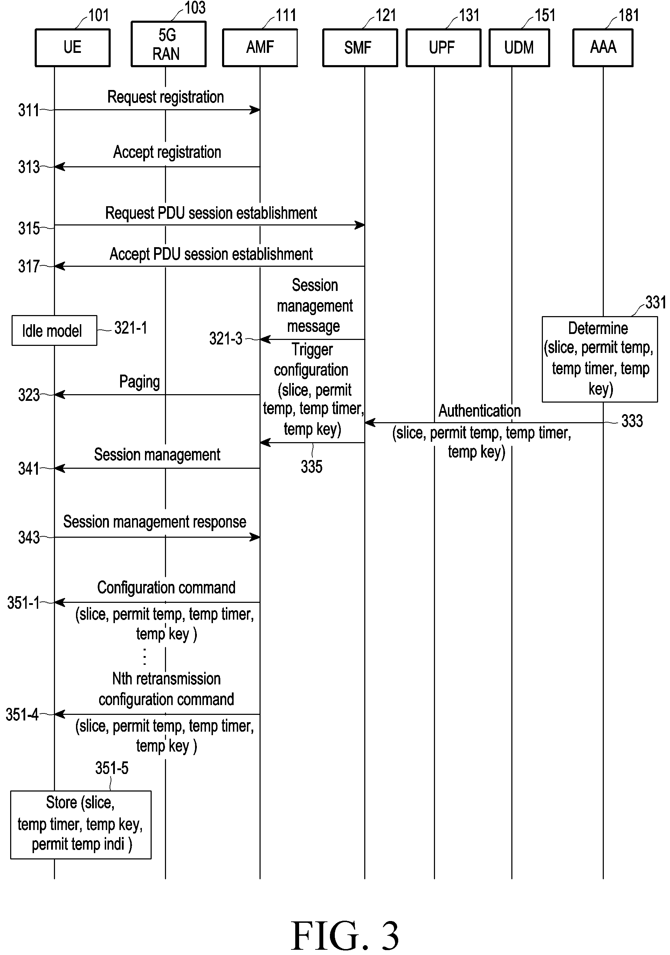

FIG. 3 is a flowchart illustrating a procedure for enabling network slice support and communication even when a slice authority or authentication change occurs in a 5G network according to an embodiment of the disclosure.

FIG. 3 illustrates a scheme in which when information related to temporary use of the network slice while the UE performs data communication is changed, the UE performs the ongoing communication session and performs a configuration process for a change.

In FIG. 3, to address the foregoing problematic circumstance, when there is an ongoing communication session, the ongoing communication session is first performed, and then, a configuration process for changing the temp timer or temp key for temporary use of the network slice may be performed.

A detailed communication procedure of a UE and a network entity is described as follows.

In step 311, the UE may send a registration request to the AMF.

In step 313, the AMF may send a registration accept message to the UE.

In step 315, the UE may send a PDU session establishment request to the SMF.

In step 317, the SMF may send a PDU session establishment accept to the UE.

As such, when the UE is in the idle mode, the SMF may perform the following operation.

In step 321-3, the SMF may send a session management message to the UE. If the UE is in idle mode (321-1), in step 323, the AMF may perform paging to make the UE in the idle state a communication-receivable state.

As such, an embodiment of the session management message sent by the SMF to the UE may be a PDU session modification command message or the like.

In process 331, the AAA makes determinations for providing and allowing various information related to the UE.

In an embodiment, the AAA may determine at least one of pieces of information such as a permission for whether to allow the function of allowing the UE to use a certain network slice how long or temporarily, a timer T35xx to be used to determine the allowed time to limit the time when it is temporarily used, and security key for temporary use of the network.

In step 333, the AAA may send an authentication message to the SMF.

The authentication message may include the following information.

In an embodiment, 1) it may inform whether the AAA or the corresponding DNN, operator network, or application network supports the function of temporarily allowing the network slice to the UE. 2) it may include bit information indicating whether to allow or an indicator on permission for whether the AAA or corresponding DNN or operator network, or application network allows the function of allowing the UE to, how long, or temporarily use a certain network slice in relation to use of the network slice by the UE. Alternatively, 3) it may include timer T35xx information that will be used to determine the allowed time, to limit the time for temporary use of the network slice. Alternatively, 4) it may include information, such as a security key for temporary use of the network slice.

In step 335, the SMF may send a message triggering the configuration to the AMF.

The message triggering the configuration may include the following information.

In an embodiment, 1) whether the SMF supports the function of allowing the network slice to be temporarily allowed and used by the UE may be known. 2) It may include bit information indicating whether to allow or an indicator for the permission of whether the SMF allows the function of allowing the UE to, how long, or temporarily use a certain network slice in relation to use of the network slice by the UE. Alternatively, 3) it may include timer T35xx information that will be used to determine the allowed time, to limit the time for temporary use of the network slice. Alternatively, 4) it may include information, such as a security key for temporary use of the network slice.

Hereinafter, steps 341 to 351-5 illustrate a procedure of how to process the data session or configuration, and authentication-related information communicated before when the UE's network slice-related authority, in particular the authority temporarily used or having been used in relation to the network slice by the UE while the UE performs data communication, authentication, or allowed time is changed.

In FIG. 3, to address the problematic circumstance, when there is an ongoing communication session as in steps 341 and 343, the corresponding ongoing communication session may be first performed. As in step 351, a configuration process for changing, e.g., the temp timer or temp key for temporary use of the network slice may be performed.

In other words, as shown in step 341, the AMF transmits a session management message to the UE. This session management message is a message transmitted from the SMF to the UE via the AMF. (SMF --> AMF --> UE)

Thereafter, the UE transmits a session management response message to the SMF. As in step 343, the UE transmits a session management response message to the AMF, and the session management response message is a message transferred from the UE to the SMF via the AMF. (UE --> AMF --> SMF)

In FIG. 3, the AMF may perform the currently ongoing session and send a configuration command message when it performs network slice data communication sent to the UE.

In step 351-1, the AMF may send a configuration command message to the UE.

The configuration command message plays the following roles, and information transmitted in this case is as follows.

The configuration command message is a message sent to change the UE-related configuration, authentication, or authority by the AMF, SMF, or an entity of the operator network providing the network slice, or the DNN providing the network slice, or the application network providing the network slice.

In this case, information transmitted included in the configuration command message is as follows.

In an embodiment, the configuration command message may 1) notify, update, or change whether the network supports the function of allowing the network slice to be temporarily allowed and used by the UE. The configuration command message may 2) notify, update, or change by including bit information indicating whether to allow or an indicator for the permission of whether it allows the function of allowing the UE to, how long, or temporarily use a certain network slice in relation to use of the network slice by the UE. 3) Alternatively, the configuration command message may notify, update, or change by including timer T35xx information that will be used to determine the allowed time, to limit the time for temporary use of the network slice. 4) Alternatively, the configuration command message may notify, update, or change by including information, such as a security key for temporary use of the network slice.

In step 351-4, the AMF may retransmit a configuration command message to the UE. As in step 351-4 after step 351-1, a case where the configuration command message is retransmitted is a case where the AMF sends the configuration command message, and the timer expires without receiving a response message, so that retransmission is performed. The retransmission message is tried up to 4 times, for example.

In this case, the following information is transmitted.

In an embodiment, the configuration command message retransmitted may notify, update, or change whether the network supports the function of allowing the network slice to be temporarily allowed and used by the UE. Alternatively, the retransmitted configuration command message may notify, update, or change by including bit information indicating whether to allow or an indicator for the permission of whether the it allows the function of allowing the UE to, how long, or temporarily use a certain network slice in relation to use of the network slice by the UE. Alternatively, the retransmitted configuration command message may notify, update, or change by including timer T35xx information that will be used to determine the allowed time, to limit the time for temporary use of the network slice. Alternatively, the retransmitted configuration command message may notify, update, or change by including information, such as a security key for temporary use of the network slice.

In step 351-5, the UE stores the received information.

In an embodiment, the UE may store the following information.

For example, the UE may store 1) information about the network slice temporally allowed to be used. The UE may store 2) timer T35xx information when the slice temporarily allowed to be used may be used. The UE may store 3) security key information for temporarily using the corresponding network slice. The UE may store 4) information such as a bit or indicator for temporary use indicating that the network slice may be temporarily used.

In step 351-5, in an embodiment, the UE may store the received information in volatile memory or non-volatile memory as follows.

### Case 1) store in volatile memory

The UE may store the received information in the volatile memory.

The information stored by the UE may be utilized when the UE establishes a PDU session or a next registration request so that it may access and use the network within the temporarily allowed authentication authority, as long as the allowed time, in the allowed network slice.

### Case 2) store in non-volatile memory

The UE may store the received information in the non-volatile memory. When the message received by the UE from the network includes the timer value or timer range, the UE may delete the previously stored timer range or timer value. The UE may store the received timer range or timer value. The stored timer value may be maintained even when the UE enters the 5GMM-deregistered state. If the UE has the stored timer, it starts the timer with the timer value. Alternatively, when the UE has the stored timer range, the UE generates a random number within the timer range and starts the timer with the generated timer random number. The information stored by the UE may be utilized when the UE establishes a PDU session or a next registration request so that it may access and use the network within the temporarily allowed authentication authority, as long as the allowed time, in the allowed network slice.

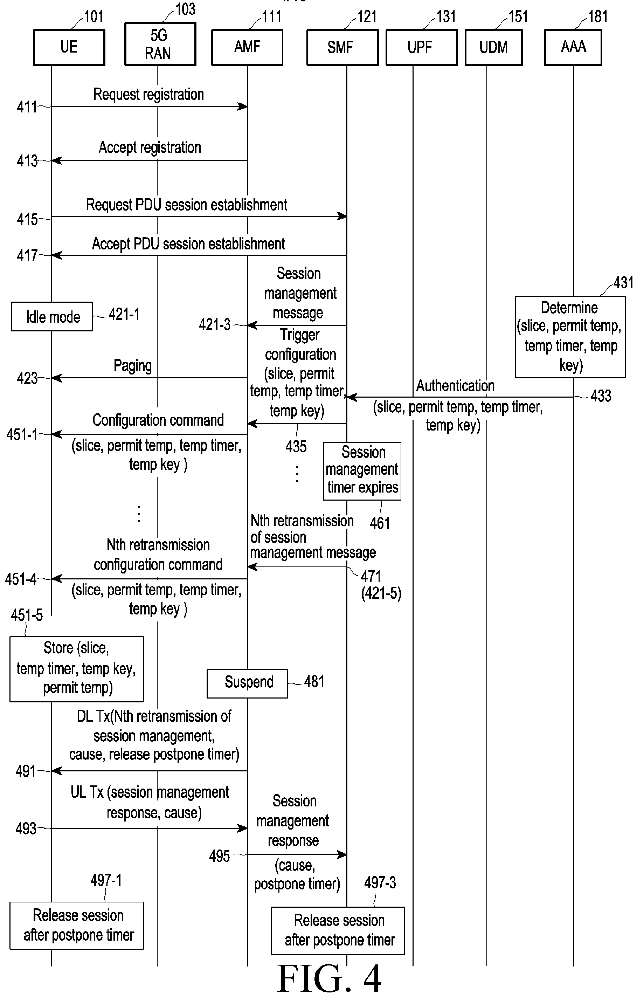

FIG. 4 is a flowchart illustrating a procedure for enabling network slice support and communication even when a slice authority or authentication change occurs in a 5G network according to an embodiment of the disclosure.

FIG. 4 is an embodiment of a method of maintaining a communication session for a predetermined period of time when information related to the temporary use of a network slice is changed while the UE performs data communication.

FIG. 4 illustrates a scheme in which, to address a mismatch between session communication performing and a network slice temporary use configuration change, configuration is performed first so that session management retransmission or session is suspended, and the session is gently released using the communication postpone timer.

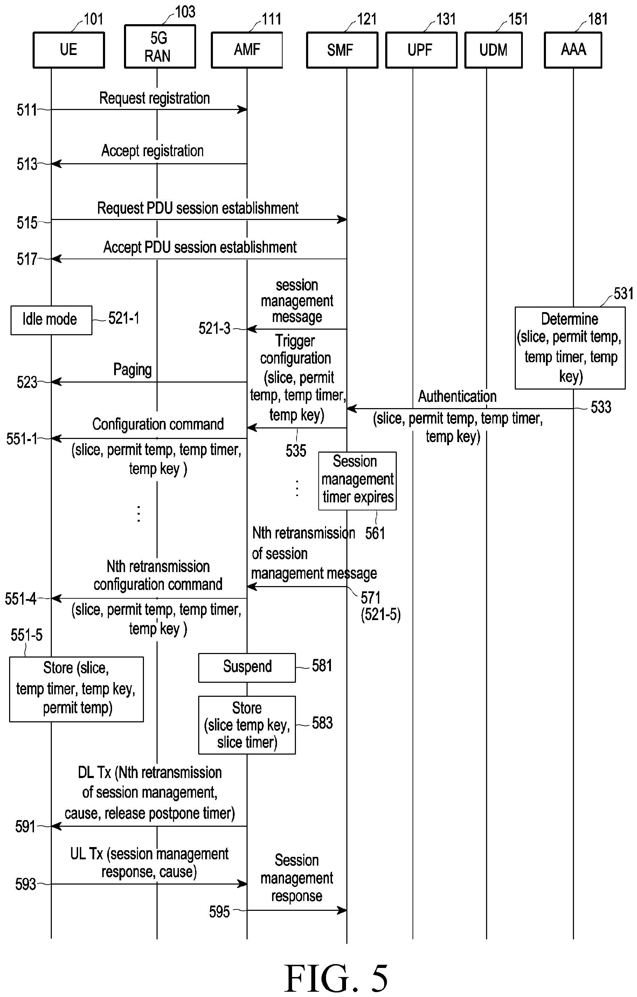

The circumstance to be solved in FIG. 4 and FIG. 5 is a circumstance in which the AMF receives a session management message from the SMF, makes the UE reception-capable by paging, and then the AMF tries to transmit a session management message for the UE received from the SMF to the UE. Further, in the circumstance, the AMF receives a configuration change-related message that changes the UE's configuration, and needs to change the UE's configuration. In other words, since in the circumstance, information about use/permission related to the UE's network slice, temporary permission authority, allowed time, or permission authentication has been changed, data communication service may be impossible, communication may be disconnected, or configuration change may not be properly transferred according to application of the configuration information and session management. The configuration command message may be retransmitted as the timer (e.g., T35zz) expires. The session management message may be retransmitted as the timer (e.g., T3591) expires.

In FIG. 4, to address the foregoing problematic circumstance, the network first performs configuration command message transmission. When the timer of the configuration command message expires, it may retransmit the configuration command message. When the session management timer expires as the SMF fails to receive a response to the session management message while the configuration command message is performed, the SMF may retransmit the session management message. The AMF may suspend the retransmitted session management message. The network (AMF or SMF) may transmit the postpone timer T35yy to the UE to release the session after the postpone timer T35yy or postpone elapses, the network may inform the UE that a cause to release the session occurs through the cause information, and the UE, upon receiving the corresponding information, may release the session after the postpone timer. The AMF may inform the SMF that the UE's session has been released due to a configuration change because UE's network slice-related use/permission or such temporary permission authority, allowed time, or allowed authentication-related information has been changed. Or the AMF may inform it of the postpone timer to allow the SMF to release the UE-related session after the postpone timer due to the configuration change because UE's network slice-related use/permission or such temporary permission authority, allowed time, or allowed authentication-related information has been changed.

A detailed communication procedure of a UE and a network entity is described as follows.

In step 411, the UE may send a registration request to the AMF.

In step 413, the AMF may send a registration accept message to the UE.

In step 415, the UE may send a PDU session establishment request to the SMF.

In step 417, the SMF may send a PDU session establishment accept to the UE.

When the UE is in the idle mode, the SMF may perform the following operation.

In step 421-3, the SMF may send a session management message to the UE. If the UE is in idle mode (421-1), in step 423, the AMF may perform paging to make the UE in the idle state a communication-receivable state.

As such, an embodiment of the session management message sent by the SMF to the UE may be a PDU session modification command message or the like.

In process 431, the AAA may make determinations for providing and allowing various information related to the UE.

In an embodiment, the AAA may determine at least one of pieces of information such as a permission for whether to allow the function of allowing the UE to use a certain network slice how long or temporarily, a timer T35xx to be used to determine the allowed time to limit the time when it is temporarily used, and security key for temporary use of the network.

In step 433, the AAA may send an authentication message to the SMF.

The authentication message may include the following information.

In an embodiment, 1) it may inform whether the AAA or the corresponding DNN, operator network, or application network supports the function of temporarily allowing the network slice to the UE. 2) it may include bit information indicating whether to allow or an indicator on permission for whether the AAA or corresponding DNN or operator network, or application network allows the function of allowing the UE to, how long, or temporarily use a certain network slice in relation to use of the network slice by the UE. Alternatively, 3) it may include timer T35xx information that will be used to determine the allowed time, to limit the time for temporary use of the network slice. Alternatively, 4) it may include information, such as a security key for temporary use of the network slice.

In step 435, the SMF may send a message triggering the configuration to the AMF.

The message triggering the configuration may include the following information.

In an embodiment, 1) whether the SMF supports the function of allowing the network slice to be temporarily allowed and used by the UE may be known. 2) It may include bit information indicating whether to allow or an indicator for the permission of whether the SMF allows the function of allowing the UE to, how long, or temporarily use a certain network slice in relation to use of the network slice by the UE. Alternatively, 3) it may include timer T35xx information that will be used to determine the allowed time, to limit the time for temporary use of the network slice. Alternatively, 4) it may include information, such as a security key for temporary use of the network slice.

Hereinafter, steps 451-1 to 497-3 illustrate a procedure of how to process the data session or configuration, and authentication-related information communicated before when the UE's network slice-related authority, in particular the authority temporarily used or having been used in relation to the network slice by the UE while the UE performs data communication, authentication, or allowed time is changed.

In FIG. 4, the following method is presented to address the foregoing issues.

When aware of the network slice data communication to be sent, the AMF may first process and send the configuration command message. It may suspend the ongoing session and, if the timer (e.g., T3591) expires, the SMF may retransmit the session management message. The session may be released after the random number time in the postpone timer or the postpone timer T35yy.

In step 451-1, the AMF may send a configuration command message to the UE.

The configuration command message plays the following roles, and information transmitted in this case is as follows.

The configuration command message is a message sent to change the UE-related configuration, authentication, or authority by the AMF, SMF, or an entity of the operator network providing the network slice, or the DNN providing the network slice, or the application network providing the network slice.

In this case, information transmitted included in the configuration command message is as follows.

In an embodiment, the configuration command message may notify, update, or change whether the network supports the function of allowing the network slice to be temporarily allowed and used by the UE. The configuration command message may notify, update, or change by including bit information indicating whether to allow or an indicator for the permission of whether it allows the function of allowing the UE to, how long, or temporarily use a certain network slice in relation to use of the network slice by the UE. Alternatively, the configuration command message may notify, update, or change by including timer T35xx information that will be used to determine the allowed time, to limit the time for temporary use of the network slice. Alternatively, the configuration command message may notify, update, or change by including information, such as a security key for temporary use of the network slice. Alternatively, the configuration command message may transfer the postpone timer T35yy information. The postpone timer plays a role as follows. may transfer the postpone timer T35yy information that allows the data session to be used by postponing the time of disconnecting communication (or session) rather than immediately disconnecting the data session previously maintained when information such as network slice-related authority, allowed use time information, or security key is changed due to a configuration command while the UE performs network slice data communication.

In step 451-4, the AMF may retransmit a configuration command message to the UE. As in step 451-4 after step 451-1, a case where the configuration command message is retransmitted is a case where the AMF sends the configuration command message, and the timer expires without receiving a response message, so that retransmission is performed. The retransmission message may be tried, e.g., four times.

In this case, the following information is transmitted.

In an embodiment, the configuration command message retransmitted may notify, update, or change whether the network supports the function of allowing the network slice to be temporarily allowed and used by the UE. Alternatively, the retransmitted configuration command message may notify, update, or change by including bit information indicating whether to allow or an indicator for the permission of whether the it allows the function of allowing the UE to, how long, or temporarily use a certain network slice in relation to use of the network slice by the UE. Alternatively, the retransmitted configuration command message may notify, update, or change by including timer T35xx information that will be used to determine the allowed time, to limit the time for temporary use of the network slice. Alternatively, the retransmitted configuration command message may notify, update, or change by including information, such as a security key for temporary use of the network slice. Alternatively, the retransmitted configuration command message may transfer the postpone timer T35yy information. The postpone timer plays a role as follows. may transfer the postpone timer T35yy information that allows the data session to be used by postponing the time of disconnecting communication (or session) rather than immediately disconnecting the data session previously maintained when information such as network slice-related authority, allowed use time information, or security key is changed due to a configuration command while the UE performs network slice data communication.

In step 451-5, the UE stores the received information.

In an embodiment, the UE may store the following information.

For example, the UE may store 1) information about the network slice temporally allowed to be used. The UE may store 2) timer T35xx information when the slice temporarily allowed to be used may be used. The UE may store 3) security key information for temporarily using the corresponding network slice. The UE may store 4) information such as a bit or indicator for temporary use indicating that the network slice may be temporarily used. 5) The UE may store the postpone timer T35yy information. The postpone timer plays a role as follows. It may store the postpone timer T35yy information that allows the data session to be used by postponing the time of disconnecting communication (or session) rather than immediately disconnecting the data session previously maintained when information such as network slice-related authority, allowed use time information, or security key is changed due to a configuration command while the UE performs network slice data communication.

In step 451-5, in an embodiment, the UE may store the received information in volatile memory or non-volatile memory as follows.

### Case 1) store in volatile memory

The UE may store the received information in the volatile memory.

The information stored by the UE may be utilized when the UE establishes a PDU session or a next registration request so that it may access and use the network within the temporarily allowed authentication authority, as long as the allowed time, in the allowed network slice.

### Case 2) store in non-volatile memory

The UE may store the received information in the non-volatile memory. When the message received by the UE from the network includes the timer value or timer range, the UE may delete the previously stored timer range or timer value. The UE may store the received timer range or timer value. The stored timer value may be maintained even when the UE enters the 5GMM-deregistered state. If the UE has the stored timer, it starts the timer with the timer value. Alternatively, when the UE has the stored timer range, the UE generates a random number within the timer range and starts the timer with the generated timer random number. The information stored by the UE may be utilized when the UE establishes a PDU session or a next registration request so that it may access and use the network within the temporarily allowed authentication authority, as long as the allowed time, in the allowed network slice. The postpone timer or postpone timer range which is the information stored by the UE may be used for the UE to release the data communication after maintaining the session by the random number value generated within the timer range or the timer value, rather than immediately disconnecting the session.

In process 491, the AMF may send a DL NAS transport message to the UE.

Thee DL NAS transport message may include a session management request message, which is a message sent from the SMF to the UE, or may be encapsulated or sent together.

The session management request message included herein may be one 1) sent to the UE by the SMF, 2) and, as the session management timer expires (step 461), 3) retransmitted (retransmission may be tried up to four times, e.g., step 471 or step 421-5), 4) transmission-suspended from the AMF to the UE (step 481), and then 5) transmitted to the UE. (step 491)

The AMF may send additional information, such as cause, postpone timer, and postpone timer range, through DL NAS transport messages as follows. Alternatively, the AMF may include at least one of additional information such as cause, postpone timer, and postpone timer range in the session management request message as follows.

In an embodiment (case A), the AMF may send the cause information together to notify that the network slice configuration is changed so that the session management, session management message is not transferred due to the configuration change for the UE, notify that it may not be transferred, or that the ongoing session should be released due to the configuration change.

The configuration change information expected to be transferred in this case is as follows.

A change to the authority for the network slice, a change to the allowed time or duration when the network slice may be used, or a change to, e.g., a security key used for authentication for using the network slice. It may be notified that it is not successful to transfer the session management message to the UE or that the session is released to the UE, or that the UE should release the session (notify).

In an embodiment, the (case B) AMF may send a postpone timer.
1) The postpone timer plays a role as follows.
   allows the data session to be used by postponing the time of disconnecting communication (or session) rather than immediately disconnecting the data session previously maintained when information such as network slice-related authority, allowed use time information, or security key is changed due to a configuration command while the UE performs network slice data communication.
1-1) The postpone timer may transmit a time value as postpone timer T35yy.
1-2) It may be transferred in the form of postpone timer range information

The postpone timer range plays a role as follows. may transfer the postpone timer range information that allows the data session to be used by postponing the time of disconnecting communication (or session) rather than immediately disconnecting the data session previously maintained when information such as network slice-related authority, allowed use time information, or security key is changed due to a configuration command while the UE performs network slice data communication.

As the method for sensing the postpone timer, three cases are possible.

In an embodiment, there is the following method for sending the postpone timer.

### (case B-1)

In other words, 1) the UE receives the postpone timer range value from the network, 2) the UE generates a random number, 3) as in 497-1, if the UE starts the timer for releasing the session by the random number in the postpone timer range, 4) the UE may transmit the corresponding random number to the network. 5) The network receiving the random number may release the session after the random number which is the postpone timer as shown in 497-3.

Alternatively, there may be the following method for sending the postpone timer.

### (case B-2)

In other words, 1) the UE receives a fixed value such as T35yy as the postpone timer from the network, 2) if the UE starts the timer for releasing the session with the postpone timer value as in 497-1, 3) the UE may transmit the corresponding timer value T35yy to the network. This case may be for synchronization when the UE and the SMF manage the session. 4) The network receiving the timer value T35yy may release the session after the timer value T35yy which is the postpone timer as shown in 497-3.

Alternatively, there may be the following method for sending the postpone timer.

### (case B-3)

In other words, 1) the UE receives the postpone timer range value from the network, 2) the UE generates a random number, 3) as in 497-1, if the UE starts the timer for releasing the session by the random number in the postpone timer range, 4) the UE may transmit the corresponding postpone timer range to the network. 5) The network receiving the postpone timer range may generate a random number within the postpone timer range which is the postpone timer as shown in 497-3, start the random number timer, and release or locally release the session after the timer value passes.

In step 493, the UE may send a UL NAS transport message to the AMF. Thee UL NAS transport message may include a session management response message, which is a message sent from the UE to the SMF, or may be encapsulated or sent together.

The UE may send additional information such as cause, postpone timer, and postpone timer range as follows, and operations of the AMF and SMF receiving the same refer to the following.

In an embodiment (case A), the UE may send cause information together to indicate that the session management is not successful in the UE or that the UE is to release the session (notify).

In an embodiment (case B), the UE may send the postpone timer to indicate to release the session after the postpone timer value or the postpone timer range.

There may be the following method for sending the postpone timer. (case B-1)

In other words, 1) the UE receives the postpone timer range value from the network, 2) the UE generates a random number, 3) if the UE starts the timer for releasing the session by the random number in the postpone timer range, 4) the UE may transmit the corresponding random number to the network. 5) The network receiving the random number may release the session after the random number which is the postpone timer as shown in 497-3.

Alternatively, there may be the following method for sending the postpone timer.

### (case B-2)

In other words, 1) the UE receives a fixed value such as T35yy as the postpone timer from the network, 2) if the UE starts the timer for releasing the session with the postpone timer value as in 497-1, 3) the UE may transmit the corresponding timer value T35yy to the network.

This case may be for synchronization when the UE and the SMF manage the session. 4) The network receiving the timer value T35yy may release the session after the timer value T35yy which is the postpone timer as shown in 497-3.

Alternatively, there may be the following method for sending the postpone timer.

### (case B-3)

In other words, 1) the UE receives the postpone timer range value from the network, 2) the UE generates a random number, 3) as in 497-1, if the UE starts the timer for releasing the session by the random number in the postpone timer, 4) the UE may transmit the corresponding postpone timer range to the network. 5) The network receiving the postpone timer range may generate a random number within the postpone timer range which is the postpone timer as shown in 497-3, start the random number timer, and release or locally release the session after the timer value passes.

In step 495, the AMF may transmit the session management response message to the SMF. The session management response message is a message sent to the SMF by the UE. When sending the session management response message, the AMF may transmit the following additional information to inform the SMF of the additional information, and the SMF may perform an additional operation according thereto.

The AMF may send additional information such as cause, postpone timer, or postpone timer range as follows.

In an embodiment (case A), the AMF may send cause information together to indicate that the session management is not successful in the UE or that the UE is to release the session (notify).

In an embodiment (case B), as the method for sending the postpone timer by the AMF, three cases are possible.

Alternatively, there may be the following method for sending the postpone timer.

### (case B-1)

In other words, 1) the UE receives the postpone timer range value from the network, 2) the UE generates a random number, 3) as in 497-1, if the UE starts the timer for releasing the session by the random number in the postpone timer, 4) the UE may transmit the corresponding random number to the network. 5) The network receiving the random number may release the session after the random number which is the postpone timer as shown in 497-3.

Alternatively, there may be the following method for sending the postpone timer.

### (case B-2)

In other words, 1) the UE receives a fixed value such as T35yy as the postpone timer from the network, 2) if the UE starts the timer for releasing the session with the postpone timer value as in 497-1, 3) the UE may transmit the corresponding timer value T35yy to the network. This case may be for synchronization when the UE and the SMF manage the session. 4) The network receiving the timer value T35yy may release the session after the timer value T35yy which is the postpone timer as shown in 497-3.

Alternatively, there may be the following method for sending the postpone timer.

### (case B-3)

In other words, 1) the UE receives the postpone timer range value from the network, 2) the UE generates a random number, 3) as in 497-1, if the UE starts the timer for releasing the session by the random number in the postpone timer, 4) the UE may transmit the corresponding postpone timer range to the network. 5) The network receiving the postpone timer range may generate a random number within the postpone timer range which is the postpone timer as shown in 497-3, start the random number timer, and release or locally release the session after the timer value passes.

As in step 497-1, the UE may store the postpone timer or the postpone timer range. Alternatively, the UE may store the random number generated in the postpone timer as a timer value.

Alternatively, the UE releases the session after the postpone timer or postpone timer range.

In step 497-3, the SMF may store the postpone timer or the postpone timer range. Alternatively, the SMF may store the random number generated in the postpone timer as a timer value. Alternatively, the SMF may store the random number received from the UE in the postpone timer as a timer value.

Alternatively, the SMF may release the session after the postpone timer or random time in the postpone timer range.

FIG. 5 is a flowchart illustrating a procedure for enabling network slice support and communication even when a slice authority or authentication change occurs in a 5G network according to an embodiment of the disclosure.

FIG. 5 is an embodiment of a method of maintaining a communication session for a predetermined period of time when information related to the temporary use of a network slice is changed while the UE performs data communication.

FIG. 5 illustrates a method of gently routing a session using a communication postpone timer. Here, routing a session may include setting the session to a route corresponding to the changed network slice information.

FIG. 5 illustrates a scheme in which, to address a mismatch between session communication performing and a network slice temporary use configuration change, configuration is performed first so that, if session management retransmission or session is suspended, the session is gently routed with the changed configuration using the communication postpone timer.

In FIG. 5, to address the foregoing problematic circumstance, the network first performs configuration command message. When a condition for retransmission of the configuration command message (e.g., when the timer of the configuration command message expires), the configuration command message may be retransmitted. When the session management timer expires while the configuration command message is performed, the session management message may be retransmitted. The AMF may suspend the retransmitted session management message. The network may gently route the session with the changed configuration using the postpone timer. The network (AMF or SMF) may transmit the postpone timer T35yy to the UE to release the session after the random number in the postpone timer or the postpone timer T35yy elapses, the network may inform the UE that a cause to release the session occurs through the cause information, and the UE, upon receiving the corresponding information, may release the session after the postpone timer. The AMF may inform the SMF that the UE's session has been released due to a configuration change because UE's network slice-related use/permission or such temporary permission authority, allowed time, or allowed authentication-related information has been changed. Or the AMF may inform it of the postpone timer to allow the SMF to route the UE-related session after the postpone timer due to the configuration change because UE's network slice-related use/permission or such temporary permission authority, allowed time, or allowed authentication-related information has been changed.

A detailed communication procedure of a UE and a network entity is described in FIG. 5 as follows.

In step 511, the UE may send a registration request to the AMF.

In step 513, the AMF may send a registration accept message to the UE.

In step 515, the UE may send a PDU session establishment request to the SMF.

In step 517, the SMF may send a PDU session establishment accept to the UE.

When the UE is in the idle mode, the SMF may perform the following operation.

In step 521-3, the SMF may send a session management message to the UE. If the UE is in idle mode (521-1), in step 523, the AMF may perform paging to make the UE in the idle state a communication-receivable state. As such, an embodiment of the session management message sent by the SMF to the UE may be a PDU session modification command message or the like.

In process 531, the AAA may make determinations for providing and allowing various information related to the UE.

In an embodiment, the AAA may determine at least one of pieces of information such as a permission for whether to allow the function of allowing the UE to use a certain network slice how long or temporarily, a timer T35xx to be used to determine the allowed time to limit the time when it is temporarily used, and security key for temporary use of the network.

In step 533, the AAA may send an authentication message to the SMF.

The authentication message may include the following information.

In an embodiment, 1) it may inform whether the AAA or the corresponding DNN, operator network, or application network supports the function of temporarily allowing the network slice to the UE. 2) it may include bit information indicating whether to allow or an indicator on permission for whether the AAA or corresponding DNN or operator network, or application network allows the function of allowing the UE to, how long, or temporarily use a certain network slice in relation to use of the network slice by the UE. Alternatively, 3) it may include timer T35xx information that will be used to determine the allowed time, to limit the time for temporary use of the network slice. Alternatively, 4) it may include information, such as a security key for temporary use of the network slice.

In step 535, the SMF may send a message triggering the configuration to the AMF.

The message triggering the configuration may include the following information.

In an embodiment, 1) whether the SMF supports the function of allowing the network slice to be temporarily allowed and used by the UE may be known. 2) It may include bit information indicating whether to allow or an indicator for the permission of whether the SMF allows the function of allowing the UE to, how long, or temporarily use a certain network slice in relation to use of the network slice by the UE. Alternatively, 3) it may include timer T35xx information that will be used to determine the allowed time, to limit the time for temporary use of the network slice. Alternatively, 4) it may include information, such as a security key for temporary use of the network slice.

Hereinafter, steps 551-1 to 595 illustrate a procedure of how to process the data session or configuration, and authentication-related information communicated before when the UE's network slice-related authority, in particular the authority temporarily used or having been used in relation to the network slice by the UE while the UE performs data communication, authentication, or allowed time is changed.

In FIG. 5, the following method is presented to address the foregoing issues.

When aware of the network slice data communication to be sent, the AMF may first process and send the configuration command message. It suspends the ongoing session and, if the timer expires, the SMF retransmits the session management message. The session may be routed by applying the one changed after the random number time in the postpone timer or the postpone timer T35yy.

In step 551-1, the AMF may send a configuration command message to the UE.

The configuration command message plays the following roles, and information transmitted in this case is as follows.

The configuration command message is a message sent to change the UE-related configuration, authentication, or authority by the AMF, SMF, or an entity of the operator network providing the network slice, or the DNN providing the network slice, or the application network providing the network slice. In this case, information transmitted included in the configuration command message is as follows.

In an embodiment, the configuration command message may notify, update, or change whether the network supports the function of allowing the network slice to be temporarily allowed and used by the UE. The configuration command message may notify, update, or change by including bit information indicating whether to allow or an indicator for the permission of whether it allows the function of allowing the UE to, how long, or temporarily use a certain network slice in relation to use of the network slice by the UE. Alternatively, the configuration command message may notify, update, or change by including timer T35xx information that will be used to determine the allowed time, to limit the time for temporary use of the network slice. Alternatively, the configuration command message may notify, update, or change by including information, such as a security key for temporary use of the network slice. Alternatively, the configuration command message may transfer the postpone timer T35yy information. The postpone timer plays a role as follows. It may transfer the postpone timer T35yy information for postponing the time of changing communication to another route rather than immediately changing the data session route previously maintained when information such as network slice-related authority, allowed use time information, or security key is changed due to a configuration command while the UE performs network slice data communication.

In step 551-4, the AMF may retransmit a configuration command message to the UE. As in step 551-4 after step 551-1, a case where the configuration command message is retransmitted is a case where the AMF sends the configuration command message, and the timer expires without receiving a response message, so that retransmission is performed. The retransmission message is tried up to 4 times, for example.

In this case, the following information is transmitted.

In an embodiment, the configuration command message retransmitted may notify, update, or change whether the network supports the function of allowing the network slice to be temporarily allowed and used by the UE. Alternatively, the retransmitted configuration command message may notify, update, or change by including bit information indicating whether to allow or an indicator for the permission of whether the it allows the function of allowing the UE to, how long, or temporarily use a certain network slice in relation to use of the network slice by the UE. Alternatively, the retransmitted configuration command message may notify, update, or change by including timer T35xx information that will be used to determine the allowed time, to limit the time for temporary use of the network slice. Alternatively, the retransmitted configuration command message may notify, update, or change by including information, such as a security key for temporary use of the network slice. Alternatively, the retransmitted configuration command message may transfer the postpone timer T35yy information. The postpone timer plays a role as follows. It may transfer the postpone timer T35yy information for postponing the time of changing communication to another route rather than immediately changing the data session to another route previously maintained when information such as network slice-related authority, allowed use time information, or security key is changed due to a configuration command while the UE performs network slice data communication.

In step 551-5, the UE stores the received information.

In an embodiment, the UE may store the following information.

For example, the UE may store 1) information about the network slice temporally allowed to be used. The UE may store 2) timer T35xx information when the slice temporarily allowed to be used may be used. The UE may store 3) security key information for temporarily using the corresponding network slice. The UE may store 4) information such as a bit or indicator for temporary use indicating that the network slice may be temporarily used. 5) The UE may store the postpone timer T35yy information. The postpone timer plays a role as follows. It may store the postpone timer T35yy information for postponing the time of changing communication to another route rather than immediately changing the data session to another route previously maintained when information such as network slice-related authority, allowed use time information, or security key is changed due to a configuration command while the UE performs network slice data communication.

In step 551-5, in an embodiment, the UE may store the received information in volatile memory or non-volatile memory as follows.

### Case 1) store in volatile memory

The UE may store the received information in the volatile memory.

The information stored by the UE may be utilized when the UE establishes a PDU session or a next registration request so that it may access and use the network within the temporarily allowed authentication authority, as long as the allowed time, in the allowed network slice.

### Case 2) store in non-volatile memory

The UE may store the received information in the non-volatile memory. When the message received by the UE from the network includes the timer value or timer range, the UE may delete the previously stored timer range or timer value. The UE may store the received timer range or timer value. The stored timer value may be maintained even when the UE enters the 5GMM-deregistered state. If the UE has the stored timer, it starts the timer with the timer value. Alternatively, when the UE has the stored timer range, the UE generates a random number within the timer range and starts the timer with the generated timer random number. The information stored by the UE may be utilized when the UE establishes a PDU session or a next registration request so that it may access and use the network within the temporarily allowed authentication authority, as long as the allowed time, in the allowed network slice. The postpone timer or postpone timer range which is the information stored by the UE may be used for the UE to route the data communication after maintaining the session by the random number value generated within the timer range or the timer value, rather than immediately disconnecting the session.

In process 591, the AMF may send a DL NAS transport message to the UE.

Thee DL NAS transport message 591 may include a session management request message, which is a message sent from the SMF to the UE, or may be encapsulated or sent together.

The session management request message included herein may be one 1) sent to the UE by the SMF, 2) and, as the session management timer expires (step 561), 3) retransmitted (retransmission may be tried up to four times, e.g., step 571 or step 521-5), 4) transmission-suspended from the AMF to the UE (step 581), and then 5) transmitted to the UE.

The AMF may send at least one of additional information, such as cause, postpone timer, and postpone timer range, through DL NAS transport messages as follows. Alternatively, the AMF may include at least one of additional information such as cause, postpone timer, and postpone timer range in the session management request message as follows. To that end, the AMF may store at least one of the slice temp key and the slice timer (583).

In an embodiment (case A), the AMF may send the cause information together to notify that the session management message is not transferred due to the configuration change for the UE, notify that it may not be transferred, or that the ongoing session should be routed due to the configuration change.

The configuration change information expected to be transferred in this case is as follows.

A change to the authority for the network slice, a change to the allowed time (slice timer) or duration when the network slice may be used, or a change to, e.g., a security key (slice temp key) used for authentication for using the network slice. It may be notified that it is not successful to transfer the session management message to the UE due to the change or that it may be required to route the session to the UE, or that the UE may be required to route the session.

In an embodiment, the (case B) AMF may send a postpone timer.
1) The postpone timer plays a role as follows.
   allows the data session to be used by postponing the time of disconnecting communication (or session) rather than immediately disconnecting the data session previously maintained when information such as network slice-related authority, allowed use time information, or security key is changed due to a configuration command while the UE performs network slice data communication.
1-1) The postpone timer may transmit a time value as postpone timer T35yy.
1-2) may transfer postpone timer range information

The postpone timer range plays a role as follows. may transfer the postpone timer range information that allows the data session to be used by postponing the time of disconnecting communication (or session) rather than immediately disconnecting the data session previously maintained when information such as network slice-related authority, allowed use time information, or security key is changed due to a configuration command while the UE performs network slice data communication.

As the method for sensing the postpone timer, three cases are possible.

In an embodiment, there is the following method for sending the postpone timer.

### (case B-1)

In other words, 1) the UE receives the postpone timer range value from the network, 2) the UE generates a random number, 3) if the UE starts the timer for releasing the session by the random number in the postpone timer range, 4) the UE may transmit the corresponding random number to the network. 5) The network receiving the random number may route the session after the random number which is the postpone timer.

Alternatively, there may be the following method for sending the postpone timer.

### (case B-2)

In other words, 1) the UE receives a fixed value such as T35yy as the postpone timer from the network, 2) if the UE starts the timer for routing the session with the postpone timer value, 3) the UE may transmit the corresponding timer value T35yy to the network. This case may be for synchronization when the UE and the SMF manage the session. 4) The network receiving the timer value T35yy may route the session after the timer value T35yy which is the postpone timer.

Alternatively, there may be the following method for sending the postpone timer.

### (case B-3)

In other words, 1) the UE receives the postpone timer range value from the network, 2) the UE generates a random number, 3) if the UE starts the timer for routing the session by the random number in the postpone timer, 4) the UE may transmit the corresponding postpone timer range to the network. 5) The network receiving the postpone timer range may generate a random number within the postpone timer range which is the postpone timer, start the random number timer, and route the session after the timer value passes.

In step 593, the UE may send a UL NAS transport message to the AMF. Thee UL NAS transport message may include a session management response message, which is a message sent from the UE to the SMF, or may be encapsulated or sent together.

The UE may send additional information such as cause, postpone timer, and postpone timer range as follows, and operations of the AMF and SMF receiving the same refer to the following.

In an embodiment (case A), the UE may send cause information together to indicate that the session management is not successful in the UE or that the UE is to route the session (notify).

In an embodiment (case B), the UE may send the postpone timer to indicate to route the session after the postpone timer value or the postpone timer range.

There may be the following method for sending the postpone timer. (case B-1)

In other words, 1) the UE receives the postpone timer range value from the network, 2) the UE generates a random number, 3) if the UE starts the timer for routing the session by the random number in the postpone timer range, 4) the UE may transmit the corresponding random number to the network. 5) The network receiving the random number may route the session after the random number which is the postpone timer.

Alternatively, there may be the following method for sending the postpone timer.

### (case B-2)

In other words, 1) the UE receives a fixed value such as T35yy as the postpone timer from the network, 2) if the UE starts the timer for routing the session with the postpone timer value, 3) the UE may transmit the corresponding timer value T35yy to the network. This case may be for synchronization when the UE and the SMF manage the session. 4) The network receiving the timer value T35yy may route the session after the timer value T35yy which is the postpone timer.

Alternatively, there may be the following method for sending the postpone timer.

### (case B-3)

In other words, 1) the UE receives the postpone timer range value from the network, 2) the UE generates a random number, 3) if the UE starts the timer for routing the session by the random number in the postpone timer, 4) the UE may transmit the corresponding postpone timer range to the network. 5) The network receiving the postpone timer range may generate a random number within the postpone timer range which is the postpone timer, start the random number timer, and route the session after the timer value passes.

In step 595, the AMF transmits the session management response message to the SMF. The session management response message is a message sent to the SMF by the UE. When sending the session management response message, the AMF may transmit the following additional information to inform the SMF of the additional information, and the SMF may perform an additional operation according thereto.

The AMF may send additional information such as cause, postpone timer, or postpone timer range as follows.

In an embodiment (case A), the AMF may send cause information together to indicate that the session management is not successful in the UE or that the UE is to route the session. (notify)

In an embodiment (case B), as the method for sending the postpone timer by the AMF, three cases are possible.

Alternatively, there may be the following method for sending the postpone timer.

### (case B-1)

In other words, 1) the UE receives the postpone timer range value from the network, 2) the UE generates a random number, 3) if the UE starts the timer for routing the session by the random number in the postpone timer, 4) the UE may transmit the corresponding random number to the network. 5) The network receiving the random number may route the session after the random number which is the postpone timer.

Alternatively, there may be the following method for sending the postpone timer.

### (case B-2)

In other words, 1) the UE receives a fixed value such as T35yy as the postpone timer from the network, 2) if the UE starts the timer for routing the session with the postpone timer value, 3) the UE may transmit the corresponding timer value T35yy to the network. This case may be for synchronization when the UE and the SMF manage the session. 4) The network receiving the timer value T35yy may route the session after the timer value T35yy which is the postpone timer.

Alternatively, there may be the following method for sending the postpone timer.

### (case B-3)

In other words, 1) the UE receives the postpone timer range value from the network, 2) the UE generates a random number, 3) if the UE starts the timer for routing the session by the random number in the postpone timer, 4) the UE may transmit the corresponding postpone timer range to the network. 5) The network receiving the postpone timer range may generate a random number within the postpone timer range which is the postpone timer, start the random number timer, and route the session after the timer value passes.

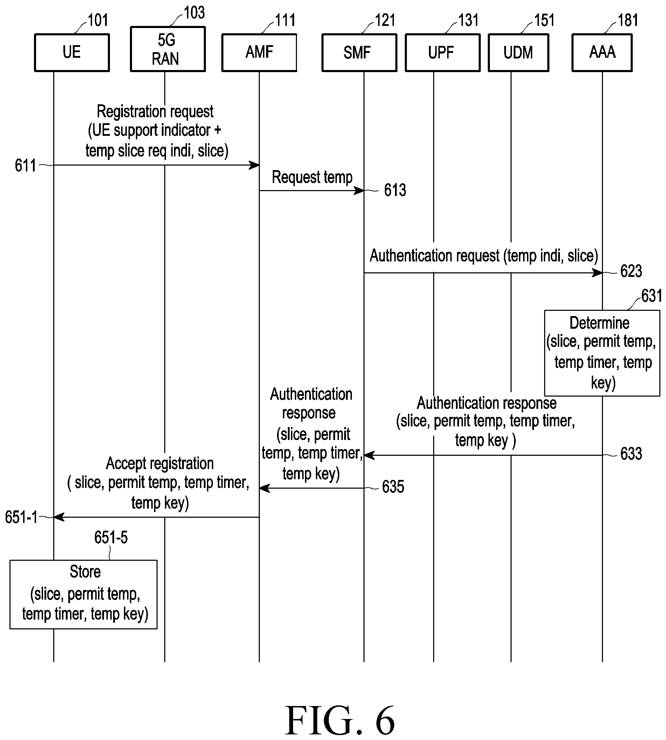

FIGS. 6 to 9 illustrate cases where information related to temporary use of a network slice by the UE is changed. In other words, illustrated are procedures of transferring corresponding information from the network to the UE when a change occurs to the configuration related to network use at the request of the UE.

FIG. 6 is a flowchart illustrating a procedure for enabling network slice support and communication even when a slice authority or authentication change occurs in a 5G network according to an embodiment of the disclosure.

In step 611, the UE may request to change the network configuration by sending a registration request to the AMF.

The registration request message may include the following information. A temporary slice request indicator (temp slice require indication) or bit requesting a network slice that may be temporarily used by the UE may be included. Alternatively, network slice information that the UE desires to temporarily use may be included. Alternatively, an indicator or bit value indicating that it is possible to support the function for the UE to temperature use the network slice may be included.

In step 613, the AMF may send a request temporary (request temp) message for requesting related information from the AAA via the SMF. The AMF may determine whether there is an authority, period, or security key for temporary use of the corresponding network slice by the UE and, if the related information is absent or related information is required, may send, e.g., a request temp message.

In step 623, the SMF may send an authentication request to the AAA.

The message may include an indicator indicating that the UE desires to temporarily use the network slice or information regarding the network slice that the UE desires to temporarily use.

In process 631, the AAA may make determinations for providing and allowing various information related to the UE. In an embodiment, the AAA may determine at least one of pieces of information such as a permission for whether to allow the function of allowing the UE to use a certain network slice how long or temporarily, a timer T35xx to be used to determine the allowed time to limit the time when it is temporarily used, and security key for temporary use of the network.

In step 633, the AAA may send an authentication response message to the SMF. The authentication response message may include the following information.

In an embodiment, 1) it may inform whether the AAA or the corresponding DNN, operator network, or application network supports the function of temporarily allowing the network slice to the UE. 2) it may include bit information indicating whether to allow or an indicator on permission for whether the AAA or corresponding DNN or operator network, or application network allows the function of allowing the UE to, how long, or temporarily use a certain network slice in relation to use of the network slice by the UE. Alternatively, 3) it may include timer T35xx information that will be used to determine the allowed time, to limit the time for temporary use of the network slice. Alternatively, 4) it may include information, such as a security key for temporary use of the network slice.

In step 635, the SMF may send an authentication response or a message triggering the configuration to the AMF. In an embodiment, it may send an authentication response to temporary use of the network slice. Alternatively, in step 635, the SMF may use another message in relation to use of the network slice of the UE to the AMF.

The message 635 may include the following information.

In an embodiment, 1) whether the SMF supports the function of allowing the network slice to be temporarily allowed and used by the UE may be known. 2) It may include bit information indicating whether to allow or an indicator for the permission of whether the SMF allows the function of allowing the UE to, how long, or temporarily use a certain network slice in relation to use of the network slice by the UE. Alternatively, 3) it may include timer T35xx information that will be used to determine the allowed time, to limit the time for temporary use of the network slice. Alternatively, 4) it may include information, such as a security key for temporary use of the network slice.

In step 651-1, the AMF may send a registration accept or authentication accept message to the UE. The registration accept message plays the following roles, and information transmitted in this case is as follows.

The registration accept message is a message sent to change the UE-related configuration, authentication, or authority by the AMF, SMF, or an entity of the operator network providing the network slice, or the DNN providing the network slice, or the application network providing the network slice. In this case, information transmitted included in the registration accept message is as follows.

In an embodiment, it may notify, update, or change whether the network supports the function of allowing the network slice to be temporarily allowed and used by the UE. The network may notify, update, or change by including bit information indicating whether to allow or an indicator for the permission of whether it allows the function of allowing the UE to, how long, or temporarily use a certain network slice in relation to use of the network slice by the UE. Alternatively, it may notify, update, or change by including timer T35xx information that will be used to determine the allowed time, to limit the time for temporary use of the network slice. Alternatively, it may notify, update, or change by including information, such as a security key for temporary use of the network slice.

In step 651-5, the UE stores the received information. In an embodiment, the UE may store the following information.

For example, the UE may store 1) information about the network slice temporally allowed to be used. The UE may store 2) timer T35xx information when the slice temporarily allowed to be used may be used. The UE may store 3) security key information for temporarily using the corresponding network slice. The UE may store 4) information such as a bit or indicator for temporary use indicating that the network slice may be temporarily used.

In step 651-5, in an embodiment, the UE may store the received information in volatile memory or non-volatile memory as follows.

### Case 1) store in volatile memory

The UE may store the received information in the volatile memory.

The information stored by the UE may be utilized when the UE establishes a PDU session or a next registration request so that it may access and use the network within the temporarily allowed authentication authority, as long as the allowed time, in the allowed network slice.

### Case 2) store in non-volatile memory

The UE may store the received information in the non-volatile memory. When the message received by the UE from the network includes the timer value or timer range, the UE may delete the previously stored timer range or timer value. The UE may store the received timer range or timer value. The stored timer value may be maintained even when the UE enters the 5GMM-deregistered state. If the UE has the stored timer, it starts the timer with the timer value. Alternatively, when the UE has the stored timer range, the UE generates a random number within the timer range and starts the timer with the generated timer random number. The information stored by the UE may be utilized when the UE establishes a PDU session or a next registration request so that it may access and use the network within the temporarily allowed authentication authority, as long as the allowed time, in the allowed network slice. The postpone timer or postpone timer range which is the information stored by the UE may be used for the UE to release the data communication after maintaining the session by the random number value generated within the timer range or the timer value, rather than immediately disconnecting the session.

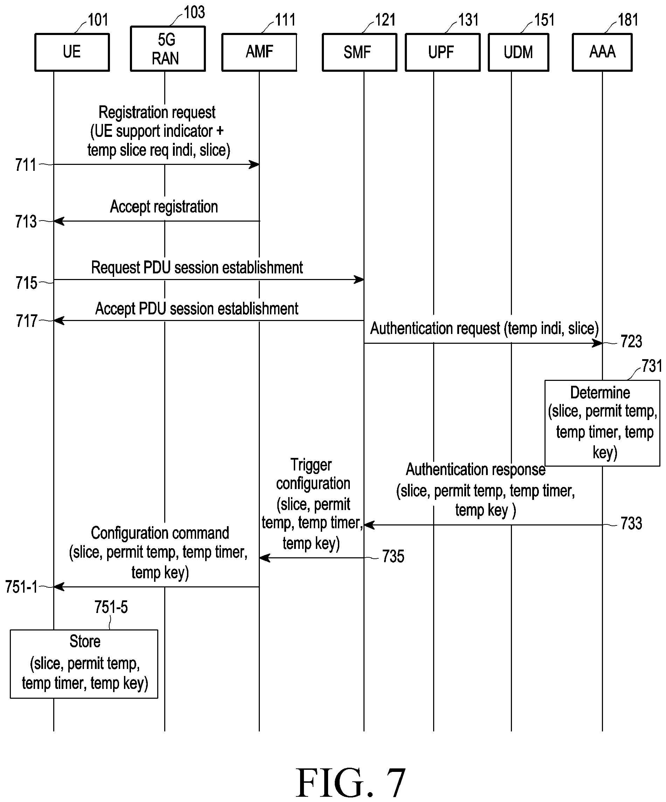

FIG. 7 is a flowchart illustrating a procedure for enabling network slice support and communication even when a slice authority or authentication change occurs in a 5G network according to an embodiment of the disclosure.

FIG. 7 illustrates a scheme of updating corresponding information when information related to temporary use of a network slice by the UE is changed.

FIG. 7 illustrates a scheme of updating related information when the UE's network slice-related authority, in particular the authority temporarily used or having been used in relation to the network slice by the UE while the UE performs data communication, authentication, or allowed time is changed.

A detailed communication procedure of a UE and a network entity is described as follows.

In step 711, the UE may send a registration request to the AMF.

The registration request message may include the following information. A temp slice require indication or bit requesting a network slice that may be temporarily used by the UE may be included. Alternatively, network slice information that the UE desires to temporarily use may be included. Alternatively, an indicator or bit value indicating that it is possible to support the function for the UE to temperature use the network slice may be included.

In step 713, the AMF may send a registration accept message to the UE.

In step 715, the UE may send a PDU session establishment request to the SMF.

In step 717, the SMF may send a PDU session establishment accept to the UE.

In step 723, the SMF may send an authentication request to the AAA.

The message 723 may include an indicator indicating that the UE desires to temporarily use the network slice or information regarding the network slice that the UE desires to temporarily use.

In process 731, the AAA may make determinations for providing and allowing various information related to the UE.

In an embodiment, the AAA may determine at least one of pieces of information such as a permission for whether to allow the function of allowing the UE to use a certain network slice how long or temporarily, a timer T35xx to be used to determine the allowed time to limit the time when it is temporarily used, and security key for temporary use of the network.

In step 733, the AAA may send an authentication response message to the SMF.

The authentication response message 733 may include the following information.

In an embodiment, 1) it may inform whether the AAA or the corresponding DNN, operator network, or application network supports the function of temporarily allowing the network slice to the UE. 2) it may include bit information indicating whether to allow or an indicator on permission for whether the AAA or corresponding DNN or operator network, or application network allows the function of allowing the UE to, how long, or temporarily use a certain network slice in relation to use of the network slice by the UE. Alternatively, 3) it may include timer T35xx information that will be used to determine the allowed time, to limit the time for temporary use of the network slice. Alternatively, 4) it may include information, such as a security key for temporary use of the network slice.

In step 735, the SMF may send a message triggering the configuration to the AMF.

The message 735 may include the following information.

In an embodiment, 1) whether the SMF supports the function of allowing the network slice to be temporarily allowed and used by the UE may be known. 2) It may include bit information indicating whether to allow or an indicator for the permission of whether the SMF allows the function of allowing the UE to, how long, or temporarily use a certain network slice in relation to use of the network slice by the UE. Alternatively, 3) it may include timer T35xx information that will be used to determine the allowed time, to limit the time for temporary use of the network slice. Alternatively, 4) it may include information, such as a security key for temporary use of the network slice.

In step 751-1, the AMF may send a configuration command message to the UE.

The configuration command message 751-1 plays the following roles, and information transmitted in this case is as follows. The configuration command message is a message sent to change the UE-related configuration, authentication, or authority by the AMF, SMF, or an entity of the operator network providing the network slice, or the DNN providing the network slice, or the application network providing the network slice. In this case, information transmitted included in the configuration command message is as follows.

In an embodiment, the configuration command message may notify, update, or change whether the network supports the function of allowing the network slice to be temporarily allowed and used by the UE. The configuration command message may notify, update, or change by including bit information indicating whether to allow or an indicator for the permission of whether it allows the function of allowing the UE to, how long, or temporarily use a certain network slice in relation to use of the network slice by the UE. Alternatively, the configuration command message may notify, update, or change by including timer T35xx information that will be used to determine the allowed time, to limit the time for temporary use of the network slice. Alternatively, the configuration command message may notify, update, or change by including information, such as a security key for temporary use of the network slice.

In step 751-5, the UE may store the received information.

In an embodiment, the UE may store the following information.

For example, the UE may store 1) information about the network slice temporally allowed to be used. The UE may store 2) timer T35xx information when the slice temporarily allowed to be used may be used. The UE may store 3) security key information for temporarily using the corresponding network slice. The UE may store 4) information such as a bit or indicator for temporary use indicating that the network slice may be temporarily used.

In step 751-5, in an embodiment, the UE may store the received information in volatile memory or non-volatile memory as follows.

### Case 1) store in volatile memory

The UE may store the received information in the volatile memory.

The information stored by the UE may be utilized when the UE establishes a PDU session or a next registration request so that it may access and use the network within the temporarily allowed authentication authority, as long as the allowed time, in the allowed network slice.

### Case 2) store in non-volatile memory

The UE may store the received information in the non-volatile memory. When the message received by the UE from the network includes the timer value or timer range, the UE may delete the previously stored timer range or timer value. The UE may store the received timer range or timer value. The stored timer value may be maintained even when the UE enters the 5GMM-deregistered state. If the UE has the stored timer, it starts the timer with the timer value. Alternatively, when the UE has the stored timer range, the UE generates a random number within the timer range and starts the timer with the generated timer random number. The information stored by the UE may be utilized when the UE establishes a PDU session or a next registration request so that it may access and use the network within the temporarily allowed authentication authority, as long as the allowed time, in the allowed network slice. The postpone timer or postpone timer range which is the information stored by the UE may be used for the UE to release the data communication after maintaining the session by the random number value generated within the timer range or the timer value, rather than immediately disconnecting the session.

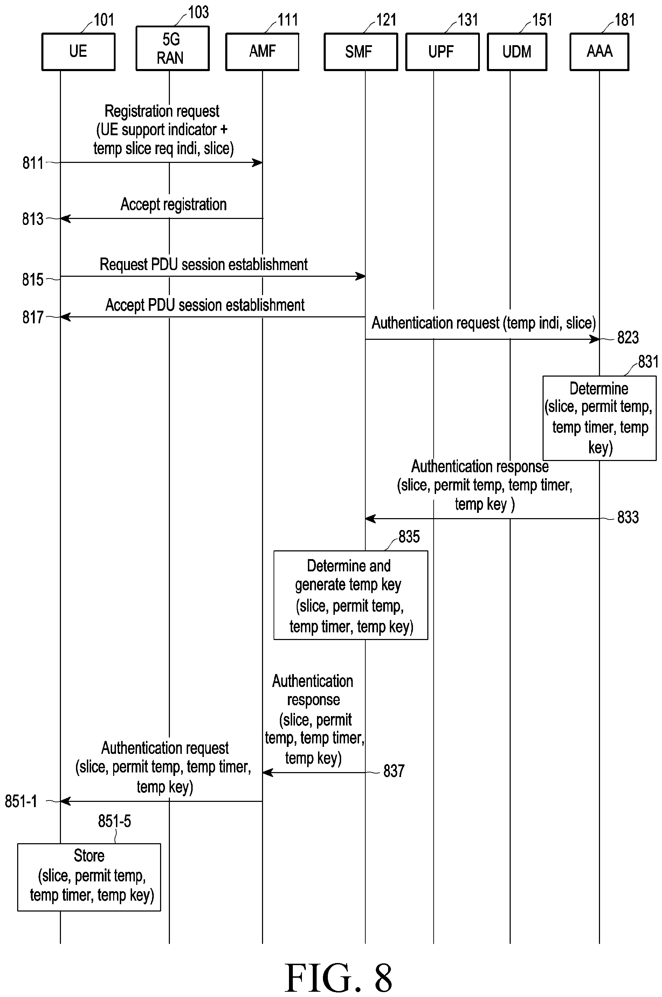

FIG. 8 is a flowchart illustrating a procedure for enabling network slice support and communication even when a slice authority or authentication change occurs in a 5G network according to an embodiment of the disclosure.

FIG. 8 illustrates a scheme of performing authentication or transferring corresponding information when information related to temporary use of a network slice by the UE, in particular authentication information, is changed.

FIG. 8 illustrates a scheme of authenticating corresponding information when the UE's network slice-related authority, in particular the authority temporarily used or having been used in relation to the network slice by the UE while the UE performs data communication, authentication, or allowed time is changed.

A detailed communication procedure of a UE and a network entity is described as follows.

In step 811, the UE may send a registration request to the AMF.

The registration request message may include the following information. A temp slice require indication or bit requesting a network slice that may be temporarily used by the UE may be included. Alternatively, network slice information that the UE desires to temporarily use may be included. An indicator or bit value indicating that it is possible to support the function for the UE to temperature use the network slice may be included.

In step 813, the AMF may send a registration accept message to the UE.

In step 815, the UE may send a PDU session establishment request to the SMF.

In step 817, the SMF may send a PDU session establishment accept to the UE.

In step 823, the SMF may send an authentication request to the AAA.

The message 823 may include an indicator indicating that the UE desires to temporarily use the network slice or information regarding the network slice that the UE desires to temporarily use.

In process 831, the AAA may make determinations for providing and allowing various information related to the UE.

In an embodiment, the AAA may determine at least one of pieces of information such as a permission for whether to allow the function of allowing the UE to use a certain network slice how long or temporarily, a timer T35xx to be used to determine the allowed time to limit the time when it is temporarily used, and security key for temporary use of the network.

In step 833, the AAA may send an authentication response message to the SMF. The authentication response message 833 may include the following information.

In an embodiment, 1) it may inform whether the AAA or the corresponding DNN, operator network, or application network supports the function of temporarily allowing the network slice to the UE. 2) it may include bit information indicating whether to allow or an indicator on permission for whether the AAA or corresponding DNN or operator network, or application network allows the function of allowing the UE to, how long, or temporarily use a certain network slice in relation to use of the network slice by the UE. Alternatively, 3) it may include timer T35xx information that will be used to determine the allowed time, to limit the time for temporary use of the network slice. Alternatively, 4) it may include information, such as a security key for temporary use of the network slice.

There are two main methods in relation to temporary use of a network slice or authenticating temporary use of a network slice.

Case 1) As illustrated in FIGS. 6, 7, and 9, the AAA generates a temp slice authentication key or a security key (e.g., temp key) and transfers the temp slice authentication key or security key to the UE via, e.g., the SMF or AMF to perform authentication in relation to, e.g., temporary use or access of the network slice.

Case 2) In another embodiment, as illustrated in FIG. 8, the AAA may 1) generate the temp slice authentication key or security key (e.g., temp key) as in step 831 and 2) transfer the generated temp slice authentication key or security key to the SMF as in step 833 to perform authentication in relation to temporary use or access of the network slice. 3) In step 835, the SMF may generate a 'temp slice derive authentication key or security key' derived from the temp slice authentication key/security key received from the AAA. The 'temp slice derive authentication key or security key' may be used for communication. 4) Thereafter, as shown in steps 837 and 851-1, the 'temp slice derive authentication key/security key' may be transferred to the UE via, e.g., the SMF and the AMF. The 'temp slice derive authentication key/security key' may be used for communication.

In step 837, the SMF may send a message triggering the configuration to the AMF. Alternatively, in step 837, the SMF may use another message in relation to use of the network slice by the UE and, in an embodiment, send, e.g., an authentication response (auth response) message to the temporary use of the network slice.

The message 837 may include the following information.

In an embodiment, 1) whether the SMF supports the function of allowing the network slice to be temporarily allowed and used by the UE may be known. 2) It may include bit information indicating whether to allow or an indicator for the permission of whether the SMF allows the function of allowing the UE to, how long, or temporarily use a certain network slice in relation to use of the network slice by the UE. Alternatively, 3) it may include timer T35xx information that will be used to determine the allowed time, to limit the time for temporary use of the network slice. Alternatively, 4) it may include information, such as a security key for temporary use of the network slice.

In step 851-1, the AMF may send an authentication request message to the UE.

The authentication request message 851-1 plays the following roles, and information transmitted in this case is as follows.

The authentication request message is a message sent to change the UE-related configuration, authentication, or authority by the AMF, SMF, or an entity of the operator network providing the network slice, or the DNN providing the network slice, or the application network providing the network slice. In this case, the information transmitted in the authentication request message 851-1 is as follows.

In an embodiment, it may notify, update, or change whether the network supports the function of allowing the network slice to be temporarily allowed and used by the UE. The network may notify, update, or change by including bit information indicating whether to allow or an indicator for the permission of whether it allows the function of allowing the UE to, how long, or temporarily use a certain network slice in relation to use of the network slice by the UE. Alternatively, it may notify, update, or change by including timer T35xx information that will be used to determine the allowed time, to limit the time for temporary use of the network slice. Alternatively, it may notify, update, or change by including information, such as a security key for temporary use of the network slice. The security key may be a security key generated (derived) by the SMF using the temp slice security key transferred from the AAA.

In step 851-5, the UE stores the received information.

In an embodiment, the UE may store the following information.

For example, the UE may store 1) information about the network slice temporally allowed to be used. The UE may store 2) timer T35xx information when the slice temporarily allowed to be used may be used. The UE may store 3) security key information for temporarily using the corresponding network slice. The security key may be a security key derived and generated by the SMF. The UE may store 4) information such as a bit or indicator for temporary use indicating that the network slice may be temporarily used.

In step 851-5, in an embodiment, the UE may store the received information in volatile memory or non-volatile memory as follows.

### Case 1) store in volatile memory

The UE may store the received information in the volatile memory.

The information stored by the UE may be utilized when the UE establishes a PDU session or a next registration request so that it may access and use the network within the temporarily allowed authentication authority, as long as the allowed time, in the allowed network slice.

### Case 2) store in non-volatile memory

The UE may store the received information in the non-volatile memory. When the message received by the UE from the network includes the timer value or timer range, the UE may delete the previously stored timer range or timer value. The UE may store the received timer range or timer value. The stored timer value may be maintained even when the UE enters the 5GMM-deregistered state. If the UE has the stored timer, it starts the timer with the timer value. Alternatively, when the UE has the stored timer range, the UE generates a random number within the timer range and starts the timer with the generated timer random number. The information stored by the UE may be utilized when the UE establishes a PDU session or a next registration request so that it may access and use the network within the temporarily allowed authentication authority, as long as the allowed time, in the allowed network slice. The postpone timer or postpone timer range which is the information stored by the UE may be used for the UE to release the data communication after maintaining the session by the random number value generated within the timer range or the timer value, rather than immediately disconnecting the session.

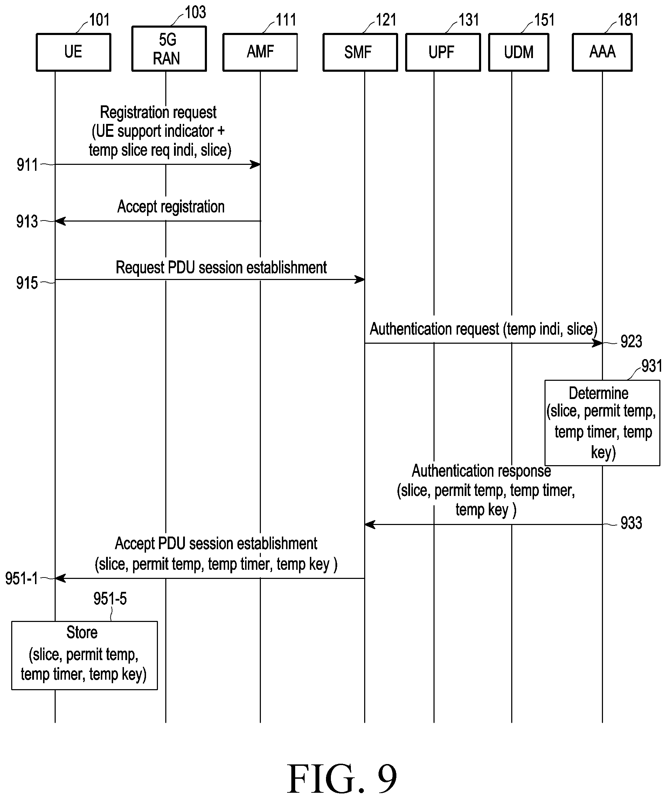

FIG. 9 is a flowchart illustrating a procedure for enabling network slice support and communication even when a slice authority or authentication change occurs in a 5G network according to an embodiment of the disclosure.

FIG. 9 illustrates a scheme of transferring corresponding information when information related to temporary use of a network slice by the UE is changed.

FIG. 9 illustrates a scheme of transferring related information when the UE's network slice-related authority, in particular the authority temporarily used or having been used in relation to the network slice by the UE while the UE performs data communication, authentication, or allowed time is changed.

A detailed communication procedure of a UE and a network entity is described as follows.

In step 911, the UE may send a registration request to the AMF.

The registration request message 911 may include the following information. A temp slice require indication or bit requesting a network slice that may be temporarily used by the UE may be included. Alternatively, network slice information that the UE desires to temporarily use may be included. Alternatively, an indicator or bit value indicating that it is possible to support the function for the UE to temperature use the network slice may be included.

In step 913, the AMF may send a registration accept message to the UE.

In step 915, the UE may send a PDU session establishment request to the SMF.

In step 923, the SMF may send an authentication request to the AAA.

The message 923 may include an indicator indicating that the UE desires to temporarily use the network slice or information regarding the network slice that the UE desires to temporarily use.

In process 931, the AAA may make determinations for providing and allowing various information related to the UE.

In an embodiment, the AAA may determine at least one of pieces of information such as a permission for whether to allow the function of allowing the UE to use a certain network slice how long or temporarily, a timer T35xx to be used to determine the allowed time to limit the time when it is temporarily used, and security key for temporary use of the network.

In step 933, the AAA may send an authentication response message to the SMF.

The authentication response message 933 may include the following information.

In an embodiment, 1) it may inform whether the AAA or the corresponding DNN, operator network, or application network supports the function of temporarily allowing the network slice to the UE. 2) it may include bit information indicating whether to allow or an indicator on permission for whether the AAA or corresponding DNN or operator network, or application network allows the function of allowing the UE to, how long, or temporarily use a certain network slice in relation to use of the network slice by the UE. Alternatively, 3) it may include timer T35xx information that will be used to determine the allowed time, to limit the time for temporary use of the network slice. Alternatively, 4) it may include information, such as a security key for temporary use of the network slice.

In step 951-1, the SMF may send a PDU session establishment accept message to the UE.

The PDU session establishment accept message 951-1 plays the following roles, and information transmitted in this case is as follows.

The PDU session establishment accept message is a message sent to change the UE-related network slice configuration, authentication, or authority by the AMF, SMF, or an entity of the operator network providing the network slice, or the DNN providing the network slice, or the application network providing the network slice.

In this case, the information transmitted in the PDU session establishment accept message 951-1 is as follows.

In an embodiment, it may notify, update, or change whether the network supports the function of allowing the network slice to be temporarily allowed and used by the UE. The network may notify, update, or change by including bit information indicating whether to allow or an indicator for the permission of whether it allows the function of allowing the UE to, how long, or temporarily use a certain network slice in relation to use of the network slice by the UE. Alternatively, it may notify, update, or change by including timer T35xx information that will be used to determine the allowed time, to limit the time for temporary use of the network slice. Alternatively, it may notify, update, or change by including information, such as a security key for temporary use of the network slice.

In step 951-5, the UE may store the received information.

In an embodiment, the UE may store the following information.

For example, the UE may store 1) information about the network slice temporally allowed to be used. The UE may store 2) timer T35xx information when the slice temporarily allowed to be used may be used. The UE may store 3) security key information for temporarily using the corresponding network slice. The UE may store 4) information such as a bit or indicator for temporary use indicating that the network slice may be temporarily used.

In step 951-5, in an embodiment, the UE may store the received information in volatile memory or non-volatile memory as follows.

### Case 1) store in volatile memory

The UE may store the received information in the volatile memory.

The information stored by the UE may be utilized when the UE establishes a PDU session or a next registration request so that it may access and use the network within the temporarily allowed authentication authority, as long as the allowed time, in the allowed network slice.

### Case 2) store in non-volatile memory

The UE may store the received information in the non-volatile memory. When the message received by the UE from the network includes the timer value or timer range, the UE may delete the previously stored timer range or timer value. The UE may store the received timer range or timer value. The stored timer value may be maintained even when the UE enters the 5GMM-deregistered state. If the UE has the stored timer, it starts the timer with the timer value. Alternatively, when the UE has the stored timer range, the UE generates a random number within the timer range and starts the timer with the generated timer random number. The information stored by the UE may be utilized when the UE establishes a PDU session or a next registration request so that it may access and use the network within the temporarily allowed authentication authority, as long as the allowed time, in the allowed network slice. The postpone timer or postpone timer range which is the information stored by the UE may be used for the UE to release the data communication after maintaining the session by the random number value generated within the timer range or the timer value, rather than immediately disconnecting the session.

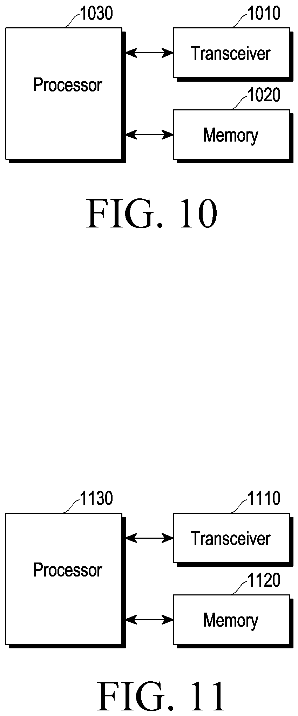

FIG. 10 is a view illustrating a configuration of a UE according to an embodiment.

As shown in FIG. 10, a UE of the disclosure may include a transceiver 1010, memory 1020, and a processor 1030. The processor 1030, transceiver 1010, and memory 1020 of the UE may operate according to the above-described communication methods by the UE. However, the components of the UE are not limited thereto. For example, the UE may include more or fewer components than the above-described components. The processor 1030, the transceiver 1010, and the memory 1020 may be implemented in the form of a single chip.

The transceiver 1010 collectively refers to the transmitter of the UE and the receiver of the UE and may transmit and receive signals to/from the base station or network entity. The signals transmitted/received with the base station may include control information and data. To that end, the transceiver 1010 may include a radio frequency (RF) transmitter for frequency-up converting and amplifying signals transmitted and an RF receiver for low-noise amplifying signals received and frequency-down converting the frequency of the received signals. However, this is merely an embodiment of the transceiver 1010, and the components of the transceiver 1010 are not limited to the RF transmitter and the RF receiver.

Further, the transceiver 1010 may include a wired/wireless transceiver and may include various components for transmitting/receiving signals.

The transceiver 1010 may receive signals via a radio channel, output the signals to the processor 1030, and transmit signals output from the processor 1030 via a radio channel.

Further, the transceiver 1010 may receive the communication signal and output it to the processor and transmit the signal output from the processor to the network entity through the wired/wireless network.

The memory 1020 may store programs and data necessary for the operation of the UE. The memory 1020 may store control information or data that is included in the signal obtained by the UE. The memory 1020 may include a storage medium, such as ROM, RAM, hard disk, CD-ROM, and DVD, or a combination of storage media.

The processor 1030 may control a series of processes for the UE to be able to operate according to the above-described embodiments. The processor 1030 may include at least one processor. For example, the processor 1030 may include a communication processor (CP) that performs control for communication and an application processor (AP) that controls an upper layer, such as an application program.

FIG. 11 is a view illustrating a configuration of a network entity according to an embodiment.

As shown in FIG. 11, a network entity of the disclosure may include a transceiver 1110, memory 1120, and a processor 1130. The processor 1130, transceiver 1110, and memory 1120 of the network entity may operate according to the above-described communication methods by the network entity. However, the components of the network entity are not limited thereto. For example, the network entity may include more or fewer components than the above-described components. The processor 1130, the transceiver 1110, and the memory 1120 may be implemented in the form of a single chip. The network entity may include network functions (NFs), such as AMF, SMF, PCF, network exposure function (NEF), UDM, and UPF described above. The network entity may include a base station.

The transceiver 1110 collectively refers to the receiver of the network entity and the transmitter of the network entity and may transmit and receive signals to/from a UE or another network entity. In this case, the signals transmitted/received with the base station may include control information and data. To that end, the transceiver 1110 may include a radio frequency (RF) transmitter for frequency-up converting and amplifying signals transmitted and an RF receiver for low-noise amplifying signals received and frequency-down converting the frequency of the received signals. However, this is merely an embodiment of the transceiver 1110, and the components of the transceiver 1110 are not limited to the RF transmitter and the RF receiver. The transceiver 1110 may include a wired/wireless transceiver and may include various components for transmitting/receiving signals.

Further, the transceiver 1110 may receive signals via a communication channel (e.g., a radio channel), output the signals to the processor 1130, and transmit signals output from the processor 1130 via a radio channel.

Further, the transceiver 1110 may receive the communication signal and output it to the processor and transmit the signal output from the processor to the UE or another network entity through the wired/wireless network.

The memory 1120 may store programs and data necessary for the operation of the network entity. Further, the memory 1120 may store control information or data that is included in the signal obtained by the network entity. The memory 1120 may include a storage medium, such as ROM, RAM, hard disk, CD-ROM, and DVD, or a combination of storage media.

The processor 1130 may control a series of processes for the network entity to be able to operate according to the above-described embodiments. The processor 1130 may include at least one processor. The methods according to the embodiments descried in the specification or claims of the disclosure may be implemented in hardware, software, or a combination of hardware and software.

When implemented in software, there may be provided a computer readable storage medium storing one or more programs (software modules). One or more programs stored in the computer readable storage medium are configured to be executed by one or more processors in an electronic device. One or more programs include instructions that enable the electronic device to execute methods according to the embodiments described in the specification or claims of the disclosure.

The programs (software modules or software) may be stored in random access memories, non-volatile memories including flash memories, read-only memories (ROMs), electrically erasable programmable read-only memories (EEPROMs), magnetic disc storage devices, compact-disc ROMs, digital versatile discs (DVDs), or other types of optical storage devices, or magnetic cassettes. Or, the programs may be stored in memory constituted of a combination of all or some thereof. As each constituting memory, multiple ones may be included.

The programs may be stored in attachable storage devices that may be accessed via a communication network, such as the Internet, Intranet, local area network (LAN), wide area network (WAN), or storage area network (SAN) or a communication network configured of a combination thereof. The storage device may connect to the device that performs embodiments of the disclosure via an external port. A separate storage device over the communication network may be connected to the device that performs embodiments of the disclosure.

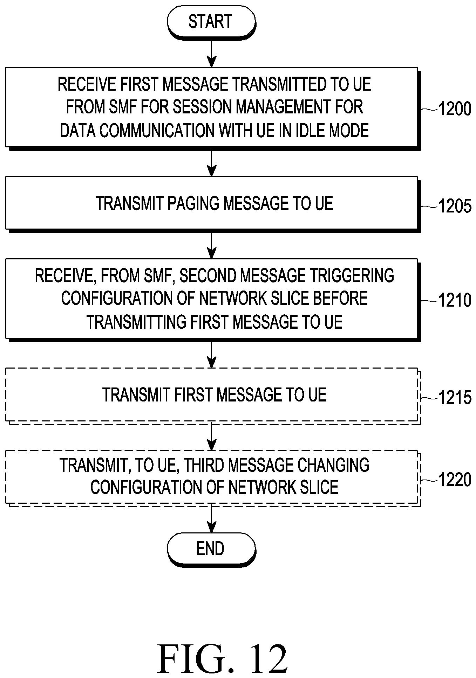

FIG. 12 is a view illustrating a method by an AMF according to an embodiment of the disclosure.

The AMF according to the disclosure may receive a first message transmitted to the UE from the SMF for session management for data communication with the UE in the idle mode (1200). The first message may be a session management request message.

The AMF may transmit a paging message to the UE to make the UE in the idle mode in a communicable state (1205).

The AMF may receive, from the SMF, a second message triggering a configuration of the network slice before transmitting the first message received from the SMF to the UE (1210). In this case, communication may be disconnected or network slice service may be interrupted due to the configuration change.

In this case, the AMF may transmit (1215) the first message to the UE to perform data communication through the existing session and then transmit (1220) a third message for changing the configuration of the network slice to the UE. Alternatively, the AMF may transmit (1220) a third message for changing the configuration of the network slice to the UE and then transmit (1215) the first message to the UE. As such, as the AMF transmits a session management message and a configuration change message to the UE, it is possible to seamlessly provide a network slice service.

Here, referring to FIG. 2, the first message may be transmitted before the third message. What is transmitted to the UE by the AMF (e.g., DL NAS Tx message) for transmission of the first message may further include at least one of a cause indicating that the session management is not transferred or timer information about postponing session release, as well as the first message. Alternatively, at least one of the cause indicating that the session management is not transferred or timer information about postponing session release may be included in the first message.

Here, referring to FIG. 3, the first message may be transmitted before the third message, and the third message may be received after communication of the ongoing session by the first message is completed.

Here, referring to FIG. 4, the first message may be transmitted after the third message, and what is transmitted to the UE by the AMF (e.g., **DL** NAS Tx message) for transmission of the first message may further include at least one of a cause indicating that the session management is not transferred or timer information about postponing session release, as well as the first message. Alternatively, at least one of the cause indicating that the session management is not transferred or timer information about postponing session release may be included in the first message.

Here, referring to FIG. 5, the first message may be transmitted after the third message, and what is transmitted to the UE by the AMF (e.g., **DL** NAS Tx message) for transmission of the first message may further include at least one of a cause indicating that the session is routed or timer information about postponing session routing, as well as the first message. Alternatively, at least one of the cause indicating that the session is routed or the timer information about postponing the session routing may be included in the first message.

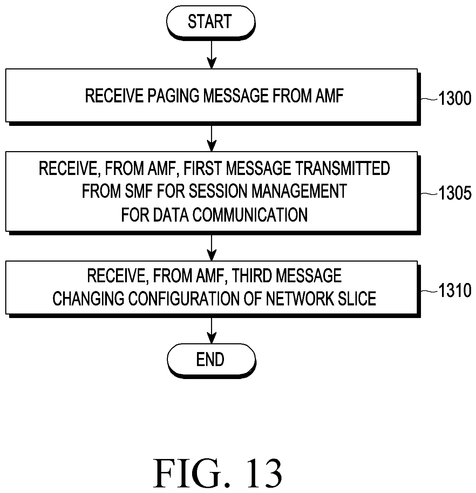

FIG. 13 is a view illustrating a method by a UE according to an embodiment of the disclosure.

The UE in the idle mode according to the disclosure may receive a paging message from the AMF (1300).

The UE may receive, from the AMF, the first message transmitted from the SMF for session management for data communication (1305). The first message may be a session management request message.

The UE may receive a third message for changing a configuration of the network slice from the AMF.

A second message triggering the configuration of the network slice may be received by the AMF before receiving the first message.

Here, referring to FIG. 2, the first message may be received before the third message, and what is received from the AMF (e.g., DL NAS Tx message) for transmission of the first message may further include at least one of a cause indicating that the session management is not transferred or timer information about postponing session release, as well as the first message. Alternatively, at least one of the cause indicating that the session management is not transferred or timer information about postponing session release may be included in the first message.

Here, referring to FIG. 3, the first message may be received before the third message, and the third message may be received after communication of the ongoing session by the first message is completed.

Here, referring to FIG. 4, the first message may be received after the third message, and what is received from the AMF (e.g., DL NAS Tx message) for transmission of the first message may further include at least one of a cause indicating that the session management is not transferred or timer information about postponing session release, as well as the first message. Alternatively, at least one of the cause indicating that the session management is not transferred or timer information about postponing session release may be included in the first message.

Here, referring to FIG. 5, the first message may be received after the third message, and what is received from the AMF (e.g., DL NAS Tx message) for transmission of the first message may further include at least one of a cause indicating that the session is routed or timer information about postponing session routing, as well as the first message. Alternatively, at least one of the cause indicating that the session is routed or the timer information about postponing the session routing may be included in the first message.

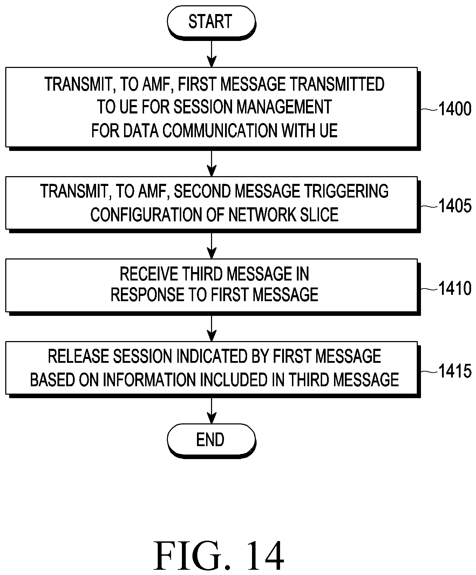

FIG. 14 is a view illustrating a method by an SMF according to an embodiment of the disclosure.

The SMF according to the disclosure may transmit, to the AMF, the first message transmitted to the UE for session management for data communication with the UE in the idle mode (1400).

The SMF may transmit a second message triggering a configuration of the network slice to the AMF (1405).

The SMF may receive a third message in response to the first message (1410).

A session indicated by the first message may be released or routed based on information included in the third message (1415).

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present invention have been described above, various changes may be made thereto without departing from the scope of the present invention. Thus, the scope of the disclosure should not be limited to the above-described embodiments, and should rather be defined by the following claims and equivalents thereof.

## Claims

1. A method for supporting data communication using a network slice to a user equipment (UE) in an idle mode by an access and mobility management function (AMF) in a 5G communication system, the method comprising:
receiving, from a session management function (SMF), a first message transmitted to the UE for session management for data communication with the UE;
transmitting, to the UE, a paging message;
receiving, from the SMF, a second message triggering a configuration of the network slice before transmitting the first message to the UE;
transmitting, to the UE, the first message; and
transmitting, to the UE, a third message for changing the configuration of the network slice.

2. The method of claim 1, wherein the first message is transmitted to the UE before the third message, and wherein a non-access stratum (NAS) message transmitted to the UE for transmission of the first message further includes at least one of a cause informing that the session management is not transferred or timer information about postponing session release.

3. The method of claim 1, wherein the first message is transmitted to the UE before the third message, and wherein the third message is transmitted after communication of an on-going session by the first message is completed.

4. The method of claim 1, wherein the first message is transmitted to the UE after the third message, and wherein a non-access stratum (NAS) message transmitted to the UE for transmission of the first message further includes at least one of a cause informing that the session management is not transferred or timer information about postponing session release.

5. The method of claim 1, wherein the first message is transmitted to the UE after the third message, and wherein a non-access stratum (NAS) message transmitted to the UE for transmission of the first message further includes at least one of a cause informing that a session is routed or timer information about postponing session routing.

6. A method for performing data communication using a network slice by a user equipment (UE) in an idle mode in a 5G communication system, the method comprising:
receiving, from an access and mobility management function (AMF), a paging message;
receiving, from the AMF, a first message transmitted from a session management function (SMF) for session management for data communication; and
receiving, from the AMF, a third message for changing a configuration of the network slice,
wherein a second message triggering the configuration of the network slice is received by the AMF before receiving the first message.

7. The method of claim 6, wherein the first message is received before the third message, and wherein a non-access stratum (NAS) message received from the AMF for transmission of the first message further includes at least one of a cause informing that the session management is not transferred or timer information about postponing session release.

8. The method of claim 6, wherein the first message is received before the third message, and wherein the third message is received after communication of an on-going session by the first message is completed.

9. The method of claim 6, wherein the first message is received after the third message, and wherein a non-access stratum (NAS) message received from the AMF for transmission of the first message further includes at least one of a cause informing that the session management is not transferred or timer information about postponing session release.

10. The method of claim 6, wherein the first message is received after the third message, and wherein a non-access stratum (NAS) message received from the AMF for transmission of the first message further includes at least one of a cause informing that a session is routed or timer information about postponing session routing.

11. A method for supporting data communication using a network slice to a user equipment (UE) in an idle mode by a session management function (SMF) in a 5G communication system, the method comprising:
transmitting, to an access and mobility management function (AMF), a first message transmitted to the UE for session management for data communication with the UE;
transmitting, to the AMF, a second message triggering a configuration of the network slice;
receiving a third message in response to the first message; and
releasing or routing a session indicated by the first message based on information included in the third message.

12. An access and mobility management function (AMF) device supporting data communication using a network slice to a user equipment (UE) in an idle mode in a 5G communication system, comprising:
a transceiver; and
a processor configured to control the transceiver to:
receive, from a session management function (SMF), a first message transmitted to the UE for session management for data communication with the UE,
transmit, to the UE, a paging message,
receive, from the SMF, a second message triggering a configuration of the network slice before transmitting the first message to the UE,
transmit, to the UE, the first message, and
transmit, to the UE, a third message for changing the configuration of the network slice.

13. A user equipment (UE) device in an idle mode performing data communication using a network slice in a 5G communication system, comprising:
a transceiver; and
a processor configured to control the transceiver to:
receive, from an access and mobility management function (AMF), a paging message,
receive, from the AMF, a first message transmitted from a session management function (SMF) for session management for data communication, and
receive, from the AMF, a third message for changing a configuration of the network slice,
wherein a second message triggering the configuration of the network slice is received by the AMF before the transceiver receives the first message.

14. A session management function (SMF) device supporting data communication using a network slice to a user equipment (UE) in an idle mode in a 5G communication system, comprising:
a transceiver; and
a processor configured to control the transceiver to:
transmit, to an access and mobility management function (AMF), a first message transmitted to the UE for session management for data communication with the UE,
transmit, to the AMF, a second message triggering a configuration of the network slice,
receive a third message in response to the first message, and
release or route a session indicated by the first message based on information included in the third message.
